# EUROPEAN PATENT APPLICATION

(11) **EP 4 773 269 A1**
(43) Date of publication of application: **08.07.2026**
(21) Application number: 24875901.1
(22) Date of filing: 30.01.2024
(51) Int. Cl.: H01M 10/04

(54) **BATTERY STACKING METHOD AND SYSTEM**

(30) Priority: 13.10.2023 CN 202311323331
(71) Applicant: Contemporary Amperex Technology Co., Limited, Ningde, Fujian 352100 (CN)
(72) Inventor: XU, Yanjun, Ningde, Fujian 352100 (CN); CHEN, Wentao, Ningde, Fujian 352100 (CN); LI, Bingchao, Ningde, Fujian 352100 (CN)
(74) Representative: Ziebig Hengelhaupt Intellectual Property Attorneys Patentanwaltskanzlei PartGmbB
(86) International application number: PCT/CN2024/074727
(87) International publication number: WO 2025/077071

(57) **Abstract**

Embodiments of the present disclosure provide a battery stack method and system. The battery stack system at least includes a controller, a base support, and a stacking table and a grabbing apparatus that are disposed on the base support. The battery stack method includes: in response to that a tray on the stacking table is in place, determining battery cell information stored in the tray; determining battery cell information of a target battery cell on a battery cell conveying line; and in the case that the battery cell information stored in the tray matches the battery cell information of the target battery cell, controlling the grabbing apparatus to grab the target battery cell and place the target battery cell in the tray.

## Description

### CROSS-REFERENCE TO RELATED APPLICATIONS

The present disclosure claims priority to Chinese Patent Application No. 202311323331.4, filed with the China National Intellectual Property Administration on October 13, 2023 and entitled "BATTERY STACK METHOD AND SYSTEM", which is incorporated herein by reference in its entirety.

### TECHNICAL FIELD

Embodiments of the present disclosure relate to the field of battery technologies, and relate to, but are not limited to, a battery stack method and system.

### BACKGROUND

New energy batteries are finding increasingly widespread applications in daily life and industries. For example, new energy vehicles equipped with batteries have been put into extensive use. Additionally, batteries are increasingly applied in fields such as energy storage.

In the production and manufacturing process of batteries, especially in the process of battery grouping, a plurality of battery cells usually needs to be stacked. However, in the related technology, the battery stack method is to directly grab the battery cells on the production line for stacking. As a result, only one type of battery can be stacked on the production line, leading to low stacking efficiency. Moreover, when different battery products are stacked, a plurality of stacking stations is required.

### SUMMARY

To solve the problems existing in the related technology, embodiments of the present disclosure provide a battery stack method and system, which can perform matching judgment on battery cell information stored in a tray on a stacking table and battery cell information of a battery cell on a conveying line, to realize stacking of different battery products. On the basis of realizing automatic stacking, the method improves the compatibility of the battery stack system.

According to a first aspect, the present disclosure provides a battery stack method, applied to a controller of a battery stack system. The battery stack system at least includes a base support, and a stacking table and a grabbing apparatus that are disposed on the base support. The battery stack method includes:

in response to that a tray on the stacking table is in place, determining battery cell information stored in the tray; determining battery cell information of a target battery cell on a battery cell conveying line; and in the case that the battery cell information stored in the tray matches the battery cell information of the target battery cell, controlling the grabbing apparatus to grab the target battery cell and place the target battery cell in the tray.

In the above embodiments, when the battery cell on the battery cell conveying line is grabbed by the grabbing apparatus, the battery cell information of the target battery cell on the conveying line and the battery cell information stored in the tray are determined, and the battery cell on the conveying line is grabbed into a matching tray for battery stacking, such that the battery stack method according to the embodiments of the present disclosure enables battery cells of different battery products to be placed in corresponding trays, thereby realizing the stacking of different battery products. On the basis of realizing automatic stacking, the method not only enhances the production efficiency of the battery stack system, but also improves the compatibility of the battery stack system, thereby reducing production costs.

In some embodiments, the battery stack system further includes an information reading apparatus disposed on the stacking table and a detection apparatus disposed on the stacking table. Said determining the battery cell information stored in the tray includes: controlling the information reading apparatus to read information from a tray identifier of the tray, and determining stacking category information of a to-be-stacked battery cell corresponding to the tray, where the stacking category information is used for representing arrangement information of the to-be-stacked battery cell; controlling the detection apparatus to perform distance detection on the tray, to obtain a tray distance between the detection apparatus and the tray; determine whether a stacked battery cell exists on the tray according to the tray distance; and in the case that a stacked battery cell exists on the tray, determining a battery cell type of the stacked battery cell on the tray.

In the above embodiments, the battery cell information stored in the tray on the stacking table is read, and the target battery cell matching the tray is grabbed to realize stacking, such that compatibility with stacking of battery cell arrays of different specifications is realized. For example, compatibility with a single-row battery cell array formed by arranging single-row battery cells and a double-row battery cell array formed by arranging double-row battery cells can be realized. In this way, compatibility (flexibility) of the stacking apparatus or even the entire battery production line is improved, and further, the production efficiency of battery grouping can be enhanced.

In some embodiments, said determining the battery cell information of the target battery cell on the battery cell conveying line includes: controlling the information reading apparatus to read information from a battery cell identifier of the target battery cell, and determining a battery cell attribute and a battery cell type of the target battery cell. The battery cell attribute is used for representing arrangement information of the target battery cell.

In some embodiments, the battery cell information stored in the tray includes stacking category information and a battery cell type. The battery cell information of the target battery cell includes a battery cell attribute and a battery cell type. The battery cell information stored in the tray matching the battery cell information of the target battery cell includes: in the case that the stacking category information of the tray matches the battery cell attribute of the target battery cell, no stacked battery cell exists on the tray; or, in the case that the stacking category information of the tray matches the battery cell attribute of the target battery cell and a stacked battery cell exists on the tray, the battery cell type of the stacked battery cell is the same as the battery cell type of the target battery cell.

In the above embodiments, before battery cells are placed in the tray for stacking, a matching degree between the target battery cell and the tray is determined, and the matched target battery cell is placed in a corresponding tray, such that the probability of stacking battery cells of different battery cell types together is reduced, and the yield rate of a battery pack obtained after the stacking is increased.

In some embodiments, the battery stack system further includes a tray conveying guide rail and a jacking apparatus that is disposed on the base support. The battery stack method further includes: in the case that the stacking category information of the tray matches the battery cell attribute of the target battery cell but the battery cell type of the stacked battery cell on the tray is different from the battery cell type of the target battery cell, controlling the jacking apparatus to run, to lower the tray with the stacked battery cell on the stacking table to the tray conveying guide rail; and controlling the tray conveying guide rail to run, to carry the tray with the stacked battery cell away from the base support.

In the above embodiments, by determining whether the stacking category information of the tray matches the battery cell attribute of the target battery cell, the probability of stacking battery cells of different battery cell types together is reduced, thereby avoiding the case that the battery pack obtained after stacking cannot be used, and increasing the yield rate of the battery pack obtained after the stacking.

In some embodiments, said controlling the grabbing apparatus to grab the target battery cell and place the target battery cell in the tray includes: in the case that the stacking category information of the tray matches the battery cell attribute of the target battery cell and no stacked battery cell exists on the tray, determining a production formula of the target battery cell according to the battery cell type of the target battery cell; determining a placement position of the target battery cell in the tray according to the production formula; and controlling the grabbing apparatus to grab the target battery cell and place the target battery cell at the placement position in the tray.

In the above embodiments, in the case that the battery cell information stored in the tray matches the battery cell information of the target battery cell, the placement position of the target battery cell in the tray is determined according to the production formula of the target battery cell, such that the grabbing apparatus can quickly place the target battery cell on the tray after grabbing, without determining whether an empty space exists on the tray for placing the battery cell after grabbing, thereby reducing the calculation load of the controller and enhancing the production efficiency of the production line.

In some embodiments, the battery cell information of the target battery cell further includes a stacking quantity, and the stacking quantity is used for representing a quantity of battery cells in a tray when stacking of the target battery cells is completed. Said controlling the grabbing apparatus to grab the target battery cell and place the target battery cell in the tray includes: in the case that the stacking category information of the tray matches the battery cell attribute of the target battery cell and a stacked battery cell exists on the tray, determining a quantity of battery cells on the tray according to a tray distance between a detection apparatus and the tray, which is determined by the detection apparatus; in the case that the quantity of battery cells is less than the stacking quantity, determining a placement position of the target battery cell in the tray according to the quantity of battery cells; and controlling the grabbing apparatus to grab the target battery cell and place the target battery cell at the placement position in the tray.

In the above embodiments, when a stacked battery cell exists on the tray, the placement position of the target battery cell in the tray is determined according to the production formula of the target battery cell, such that the grabbing apparatus can quickly place the target battery cell on the tray after grabbing, without determining whether an empty space exists on the tray for placing the battery cell after grabbing, thereby reducing the calculation load of the controller and enhancing the production efficiency of the production line.

In some embodiments, the battery stack method further includes: in the case the quantity of battery cells is equal to the stacking quantity, controlling the jacking apparatus to run, to lower a tray on which stacking is completed on the stacking table to the tray conveying guide rail; and controlling the tray conveying guide rail to run, to carry the tray on which stacking is completed away from the base support.

In some embodiments, the battery stack system further includes a tray conveying guide rail and a jacking apparatus that is disposed on the base support. The battery stack method further includes: in response to that no tray exists on the stacking table, determining whether a tray exists on the tray conveying guide rail; in the case that a tray exists on the tray conveying guide rail, controlling the tray conveying guide rail to run, to drive the tray to move to a stacking position of the base support; controlling the jacking apparatus to run, to jack up the tray at the stacking position to the stacking table; and in response to that no tray exists on the tray conveying guide rail, controlling the tray conveying guide rail to stop running until a tray exists on the tray conveying guide rail.

In some embodiments, the battery stack method further includes: in response to that a tray exists on the stacking table, controlling the tray conveying guide rail to stop running.

In the above embodiments, the trays on the stacking table and the tray conveying guide rail are detected. When no tray exists on the stacking table, a tray is transported to the stacking table through the tray conveying guide rail, such that stacking of battery cells without shutdown is realized. Conversely, in the case that a tray exists on the stacking table, the tray conveying guide rail is stopped from running, to avoid the problem that the stacking motor runs all the time, resulting in the tray on the guide rail being transported to the stacking table with a tray, thus causing the stacking process to be out of sequence and damaging the battery cell being stacked.

In some embodiments, the stacking table includes a first stacking table and a second stacking table. The battery stack method further includes: in response to that a to-be-stacked battery cell corresponding to the tray is a single-row battery cell, placing the tray on the first stacking table; and in response to that a to-be-stacked battery cell corresponding to the tray is a double-row battery cell, placing the tray on the second stacking table.

In the above embodiments, two or more stacking tables are provided to share a conveying line channel for conveying to-be-stacked battery cells, such that the battery stack system realizes coordinated operational timing, thereby reducing the takt time and enhancing the production efficiency.

In some embodiments, the first stacking table and the second stacking table are each provided with a detection apparatus. The battery stack method further includes: detecting stacking quantities of stacked battery cells in trays of the first stacking table and the second stacking table through the detection apparatuses, respectively; and in response to that the quantity of stacked battery cells on the first stacking table or the second stacking table is equal to a stacking quantity, controlling the jacking apparatus to run, to carry the tray on the first stacking table or the second stacking table away from the stacking table. The stacking quantity is used for representing a quantity of battery cells in a tray when stacking of the stacked battery cells battery cells is completed.

In the above embodiments, the stacking state of each stacking table can be automatically determined, and after one stacking table is full of battery cells, the battery cells are placed on the other stacking table, such that stacking of battery cells without shutdown is realized.

In some embodiments, the battery stack system further includes shapers and a pushing plate that are disposed on the base support. The battery stack method further includes: the shapers acting in pairs pushing battery cells on the tray to perform an alignment operation, and the pushing plate pushing the battery cells on the tray to perform a pushing operation; and each time after a battery cell is placed in the tray, repeatedly controlling the alignment operation of the shapers and the pushing operation of the pushing plate until a battery having a predetermined length is obtained by stacking.

In the above embodiments, since the alignment of battery cells can be realized by pushing both end faces of the battery cells through the pushing plate, a neat battery cell array with aligned end faces can be easily formed. Since after aligning both end faces of the battery cells, an end surface of the last battery cell in the array is further pushed to move close to the side of the first battery cell, the battery cell array can further be made neat and compact. This further improves the neatness of the battery cell array, thereby enabling a neat battery cell array to be obtained by stacking.

According to a second aspect, the embodiments of the present disclosure provide a battery stack system. The battery stack system includes a base support; a stacking table, disposed on the base support and configured to support a tray; a grabbing apparatus, disposed on the base support and configured to grab a target battery cell on a battery cell conveying line; and a controller. The controller is configured to: in response to that a tray on the stacking table is in place, determine battery cell information stored in the tray; determine battery cell information of a target battery cell on a battery cell conveying line; and in the case that the battery cell information stored in the tray matches the battery cell information of the target battery cell, control the grabbing apparatus to grab the target battery cell and place the target battery cell in the tray.

In the above embodiments, when the battery cell on the battery cell conveying line is grabbed by the grabbing apparatus, the battery cell information of the target battery cell on the conveying line and the battery cell information stored in the tray are determined, and the battery cell on the conveying line is grabbed into a matching tray for battery stacking, such that the battery stack method according to the embodiments of the present disclosure enables battery cells of different battery products to be placed in corresponding trays, thereby realizing the stacking of different battery products. On the basis of realizing automatic stacking, the method not only enhances the production efficiency of the battery stack system, but also improves the compatibility of the battery stack system, thereby reducing production costs.

In some embodiments, the battery stack system further includes: an information reading apparatus, disposed on the stacking table and configured to read information from a tray identifier of the tray; and a detection apparatus, disposed on the stacking table and configured to perform distance detection on the tray. The controller is further configured to: control the information reading apparatus to read information from a tray identifier of the tray, and determine stacking category information of a to-be-stacked battery cell corresponding to the tray, where the stacking category information is used for representing arrangement information of the to-be-stacked battery cell; control the detection apparatus to perform distance detection on the tray, to obtain a tray distance between the detection apparatus and the tray; determine whether a stacked battery cell exists on the tray according to the tray distance; and in the case that a stacked battery cell exists on the tray, determine a battery cell type of the stacked battery cell on the tray.

In the above embodiments, the battery cell information stored in the tray on the stacking table is read, and the target battery cell matching the tray is grabbed to realize stacking, such that compatibility with stacking of battery cell arrays of different specifications is realized. For example, compatibility with a single-row battery cell array formed by arranging single-row battery cells and a double-row battery cell array formed by arranging double-row battery cells can be realized. In this way, compatibility (flexibility) of the stacking apparatus or even the entire battery production line is improved, and further, the production efficiency of battery grouping can be enhanced.

In some embodiments, the battery stack system further includes: a tray conveying guide rail, disposed on the stacking table and configured to transport the tray; and a jacking apparatus, disposed on the stacking table and configured to lift and lower the tray. The controller is further configured to: in response to that no tray exists on the stacking table, determine whether a tray exists on the tray conveying guide rail; in the case that a tray exists on the tray conveying guide rail, control the tray conveying guide rail to run, to drive the tray to move to a stacking position of the base support; control the jacking apparatus to run, to jack up the tray at the stacking position to the stacking table; and in response to that no tray exists on the tray conveying guide rail, control the tray conveying guide rail to stop running until a tray exists on the tray conveying guide rail.

In the above embodiments, the trays on the stacking table and the tray conveying guide rail are detected. When no tray exists on the stacking table, a tray is transported to the stacking table through the tray conveying guide rail, such that stacking of battery cells without shutdown is realized. Conversely, in the case that a tray exists on the stacking table, the tray conveying guide rail is stopped from running, to avoid the problem that the stacking motor runs all the time, resulting in the tray on the guide rail being transported to the stacking table with a tray, thus causing the stacking process to be out of sequence and damaging the battery cell being stacked.

In some embodiments, the stacking table includes a first stacking table and a second stacking table, where the first stacking table is configured to place a tray with stacked single-row battery cells; and the second stacking table is configured to place a tray with stacked double-row battery cells; and detection apparatuses, disposed on the first stacking table and the second stacking table, respectively, and configured to detect stacking quantities of stacked battery cells in trays of the first stacking table and the second stacking table. The controller is further configured to: detect stacking quantities of stacked battery cells on the first stacking table and the second stacking table through the detection apparatuses, respectively; and in response to that the quantity of stacked battery cells on the first stacking table or the second stacking table is equal to a stacking quantity, control the jacking apparatus to run, to carry the tray on the first stacking table or the second stacking table away from the stacking table. The stacking quantity is used for representing a quantity of battery cells in a tray when stacking of the stacked battery cells is completed.

In the above embodiments, the stacking state of each stacking table can be automatically determined, and after one stacking table is full of battery cells, the battery cells are placed on the other stacking table, such that stacking of battery cells without shutdown is realized.

In some embodiments, the battery stack system further includes: shapers, disposed on the stacking table, where the shapers act in pairs and are configured to push battery cells on the tray to perform an alignment operation; and a pushing plate, disposed on the stacking table, and configured to push the battery cells on the tray to perform a pushing operation. The controller is further configured to: push, through the shapers acting in pairs, battery cells on the tray to perform an alignment operation, and push, through the pushing plate, the battery cells on the tray to perform a pushing operation; and each time after a battery cell is placed in the tray, repeatedly control the alignment operation of the shapers and the pushing operation of the pushing plate until a battery having a predetermined length is obtained by stacking.

In the above embodiments, since the alignment of battery cells can be realized by pushing both end faces of the battery cells through the pushing plate, a neat battery cell array with aligned end faces can be easily formed. Since after aligning both end faces of the battery cells, an end surface of the last battery cell in the array is further pushed to move close to the side of the first battery cell, the battery cell array can further be made neat and compact. This further improves the neatness of the battery cell array, thereby enabling a neat battery cell array to be obtained by stacking.

The above description only refers to an overview of the technical solutions of the present disclosure. To more clearly understand the technical means of the present disclosure to enable implementation in accordance with the content of the specification, and to make the above and other objectives, features and advantages of the present disclosure more apparent, specific implementations of the present disclosure are listed below.

### BRIEF DESCRIPTION OF THE DRAWINGS

FIG. 1 is a schematic diagram of a planar structure of a target battery cell according to the embodiments of the present disclosure;
FIG. 2 is a first optional schematic flow diagram of a battery stack method according to the embodiments of the present disclosure;
FIG. 3 is a second optional schematic flow diagram of a battery stack method according to the embodiments of the present disclosure;
FIG. 4 is a schematic structural diagram of a battery stack system according to the embodiments of the present disclosure;
FIG. 5 is a first schematic structural diagram of a stacking table in a battery stack system according to the embodiments of the present disclosure;
FIG. 6 is a second schematic structural diagram of a stacking table in a battery stack system according to the embodiments of the present disclosure;
FIG. 7 is a third schematic structural diagram of a stacking table in a battery stack system according to the embodiments of the present disclosure;
FIG. 8 is a logical control diagram of tray transport according to the embodiments of the present disclosure;
FIG. 9 is a logic flow diagram of performing battery cell stacking after the tray is in place according to the embodiments of the present disclosure; and
FIG. 10 is a logic flow diagram of resetting a battery cell stack system after battery cell stacking according to the embodiments of the present disclosure.

Descriptions of reference numerals:
401-base support; 402-stacking table; 403-grabbing apparatus; 404-tray; 501-information reading apparatus; 502-detection apparatus; 503-position detection apparatus; 601-tray conveying guide rail; 602-jacking apparatus; 603-stopper; 604-stacking motor; 605-jacking support; 606-stacking table support; 607-synchronous lifter; 4021-first stacking table; 4022-second stacking table; and 701-shaper.

### DETAILED DESCRIPTION

To make the objectives, technical solutions, and advantages of the present disclosure clearer, the present disclosure is described in further detail below with reference to the accompanying drawings. The described embodiments are not to be considered as a limitation to the present disclosure. All other embodiments obtained by a person of ordinary skill in the art without creative efforts shall fall within the scope of protection of the present disclosure.

In the following description, reference is made to "some embodiments", which describe a subset of all possible embodiments, but it can be understood that "some embodiments" may be the same subset or different subsets of all possible embodiments and may be combined with each other without conflict. Unless otherwise defined, all technical and scientific terms used in the embodiments of the present disclosure have the same meaning as those usually understood by a person skilled in the art to which the embodiments of the present disclosure belong. The terms used in the embodiments of the present disclosure are merely intended to describe objectives of the embodiments of the present disclosure, but are not intended to limit the present disclosure.

At present, new energy batteries are being applied more and more widely in life and industry. New energy batteries are not only applied in energy storage power systems such as hydropower, thermal power, wind power and solar power stations, but are also widely applied in electric transportation vehicles such as electric bicycles, electric motorcycles, electric vehicles, as well as in aerospace and other fields. With the continuous expansion of the application field of power batteries, the market demand for power batteries is also constantly increasing.

In the production and manufacturing process of batteries, stacking and shaping need to be performed on the batteries or battery units, such that the batteries or the battery units can be arranged neatly and aligned with each other, thereby satisfying requirements of a battery array or battery module in aspects such as an outline size and arrangement neatness. In addition, the batteries or battery units that are arranged neatly at the stacking station facilitate simplification of subsequent operations such as pressing the battery array or battery unit array and adhering heat exchange plates and simplification of corresponding processing devices. Moreover, arranging the battery array or battery unit array neatly before grouping helps to improve the compactness of the battery module, and finally helps to improve the volume utilization rate of the batteries.

To adapt to different product requirements, battery manufacturers usually need to manufacture battery products of various specifications. Therefore, there are a variety of battery grouping forms. For example, there is a form in which target battery cells are grouped in a single row (sometimes also referred to as a "single-row module"), a form in which two or more target battery cells are adhered to form a battery unit, and then a plurality of battery units are arranged into a group (sometimes also referred to as a "double-row module" or "multi-row module"), etc. To improve production efficiency, battery arrays are sometimes stacked according to the designed battery grouping form. However, current apparatuses for stacking batteries or battery units can stack only one of the single-row module, double-row module, and multi-row module described above. If battery modules in different arrangement forms need to be stacked, the stacking apparatus or even the production line needs to be shut down to replace accessories, reconfigure processing parameters, and the like, which is troublesome, time-consuming, and labor-consuming, and thus not beneficial to improving the level of production automation and enhancing the production efficiency. Moreover, processing tools and accessories, and the like, that are suitable for battery modules of different arrangement forms also need to be prepared. A large amount of storage space for the tools and accessories is needed on the production line, which is not beneficial to controlling production costs.

To mitigate the problem in the related technology where multi-product compatible production cannot be realized, the discloser finds through research that stacking of a variety of battery products at one station can be realized by stacking trays for different types of batteries on a stacking table of a stacking station. In the case that a tray on a stacking table is in place, battery cell information stored in the tray (i.e., battery cell information of a battery cell to be loaded onto the tray) and battery cell information of a target battery cell on a battery cell conveying line are separately determined. In the case that the battery cell information stored in the tray matches the battery cell information of the target battery cell, a grabbing apparatus is controlled to grab the target battery cell and place the target battery cell into the tray, so as to realize stacking of one type of target battery cell, and in the case of multiple types of trays and multiple types of target battery cells, realize stacking of multiple types of battery products.

In this way, when the battery cell on the battery cell conveying line is grabbed by the grabbing apparatus, the battery cell information of the target battery cell on the conveying line and the battery cell information stored in the tray are determined, and the battery cell on the conveying line is grabbed into a matching tray for battery stacking, such that the battery stack method according to the embodiments of the present disclosure enables target battery cells of different battery products to be placed into corresponding trays, thereby realizing the stacking of different battery products. On the basis of realizing automatic stacking, the method not only enhances the production efficiency of the battery stack system, but also improves the compatibility of the battery stack system, thereby reducing production costs.

The battery stack method according to the embodiments of the present disclosure can be used in the battery production process, for example, for stacking batteries or battery units. Certainly, it should be understood by a person skilled in the art that the battery stack method according to the embodiments of the present disclosure is not only used for stacking various battery cells in the battery production and manufacturing process, but also can be used for stacking objects that need to be stacked in other fields.

In the production and manufacturing process of products such as batteries, the batteries or battery units need to be stacked into a neat array, so as to facilitate rapid push of subsequent processing such as battery compression and grouping and box packing. The so-called "stacking" in the embodiments of the present disclosure includes an action of causing the battery cells placed close to each other to form an array that is arranged neatly at least in one of the extension directions of the array. The so-called neat arrangement includes at least one of alignment cases such as alignment of same-side end faces of the battery cells or alignment of center lines of the battery cells.

The battery stack method according to the embodiments of the present disclosure is applied before battery grouping. The battery pack after stacking and grouping may, but is not limited to, be used in an electrical device such as a vehicle, a ship, or aircraft. The battery pack obtained after stacking according to the present disclosure may be used to form a power supply system of the electrical device.

In the battery stack method according to the embodiments of the present disclosure, the battery stack system at least includes a controller, a base support, and a stacking table and a grabbing apparatus that are disposed on the base support. Here, the controller may be any one of a programmable logic controller (PLC), a single-chip microcomputer, a middle-level computer, and an upper computer. The controller may include a processor and a memory storing processor-executable instructions. The instructions, when executed by the processor, cause the process to implement the battery stack method according to the embodiments of the present disclosure. The base support is configured to support the stacking table and the grabbing apparatus. The stacking table is configured to place the tray, providing a stable loading platform for the tray and the stacking of the target battery cells. The grabbing apparatus is configured to grab an incoming target battery cell on a battery cell conveying line, and place the battery cell into the tray, thereby realizing stacking of a plurality of battery cells in the tray. The controller serves as an execution body for the battery stack method according to the embodiments of the present disclosure.

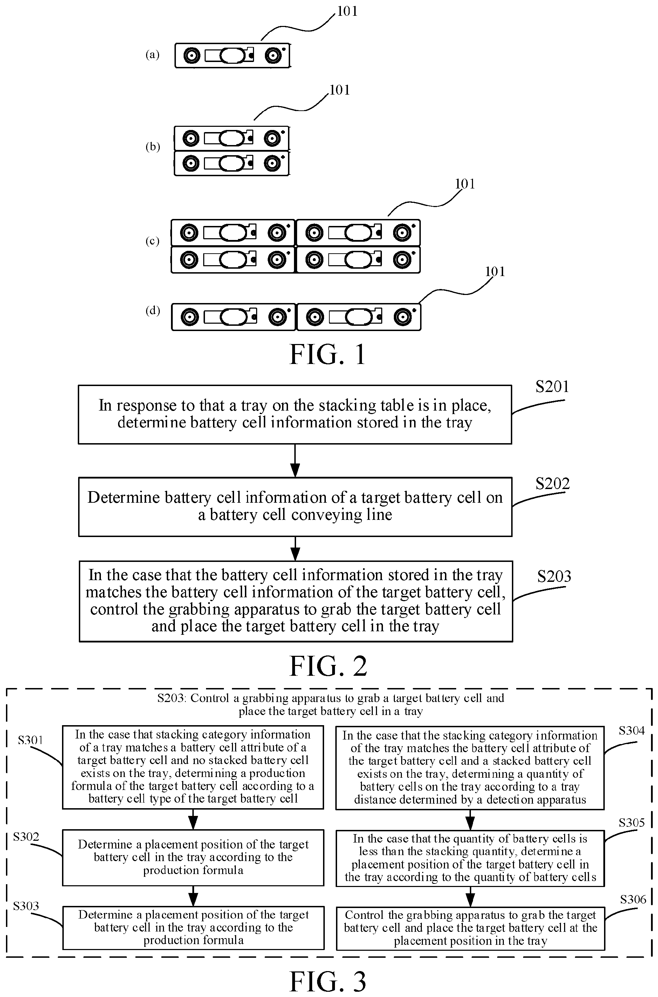

In some embodiments, FIG. 1 is a schematic diagram of a planar structure of a target battery cell according to the embodiments of the present disclosure. As shown in FIG. 1, a target battery cell 101 may include a battery, a battery unit formed by combining two or more battery cells, or the like. The target battery cell 101 may be a prismatic battery as shown in (a) of FIG. 1, i.e., a single-row battery cell. The target battery cell 101 may also be a battery unit formed by joining large surfaces of two battery cells as shown in (b) of FIG. 1, or a battery unit formed by joining side surfaces of two battery cells as shown in (d) of FIG. 1, i.e., a double-row battery cell. The target battery cell may further be a battery unit formed by joining four batteries in pairs as shown in (c) of FIG. 1. Certainly, the structure of the target battery cell in the embodiments of the present disclosure is not limited to the forms shown in FIG. 1. The manner of combining two or more battery cells is not limited to joining, and may also be other manners such as mechanical connection.

In some embodiments, the target battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickelcadmium battery, a lead storage battery, or the like. This is not limited in the embodiments of the present disclosure. Although not shown in the figure, the target battery cell generally includes an electrode assembly. The electrode assembly includes a positive electrode, a negative electrode, and a spacer. In the charging and discharging process, the target battery cell, active ions (such as lithium ions) intercalate and deintercalate back and forth between the positive electrode and the negative electrode. The spacer is disposed between the positive electrode and the negative electrode to prevent a short circuit between the positive and negative electrodes and to allow active ions to pass through.

In some implementations, the target battery cell further includes an electrolyte that serves to conduct ions between the positive electrode and the negative electrode. The type of the electrolyte is not specifically limited in the present disclosure, and may be selected according to requirements. For example, the electrolyte may be in a liquid, gel, or solid state.

In some implementations, the target battery cell may include a shell. The shell is configured to encapsulate the electrode assembly, the electrolyte, and other components. The shell may be a steel shell, an aluminum shell, a plastic shell (such as polypropylene), a composite metal shell (such as a copper-aluminum composite shell), an aluminum-plastic film, or the like.

As an example, the target battery cell may be a cylindrical target battery cell, a prismatic target battery cell, a pouch target battery cell, or a target battery cell in another shape. The prismatic target battery cell includes a square-case target battery cell, a blade-shaped target battery cell, and a multi-prism battery. For example, the multi-prism battery may be a hexagonal prism battery or the like. This is not particularly limited in the present disclosure.

FIG. 2 is a first optional schematic flow diagram of a battery stack method according to the embodiments of the present disclosure. As shown in FIG. 2, the battery stack method according to the embodiments of the present disclosure may be implemented by means of step S201 to step S203:
Step S201, in response to that a tray on the stacking table is in place, determine battery cell information stored in the tray.

In the embodiments of the present disclosure, the stacking table is disposed on the base support and is configured to support a tray and the battery cells stacked on the tray. For example, the stacking table is configured to support to-be-stacked battery cells or a stacked battery cell array, and battery cells that have not been completely stacked or a battery cell array that has been completely stacked.

In some embodiments, the battery stack system further includes a tray conveying guide rail and a jacking apparatus that is disposed on the base support. The tray conveying guide rail is located below the base support, and the tray conveying guide rail is configured to transport an empty tray to the base support. The jacking apparatus jacks up an empty tray to the stacking table. The tray being in place on the stacking table may refer to that the tray reaches a specified position of the tray on the stacking table.

In the embodiments of the present disclosure, the battery stack system further includes an information reading apparatus disposed on the stacking table. The information reading apparatus may be a radio frequency identification (RFID) apparatus. Each tray is provided with an electronic tag. After the tray on the stacking table is in place, the electronic tag of the tray may be read on the basis of the information reading apparatus, to obtain the battery cell information stored in the tray. For example, the battery cell information may include whether a battery cell that can be stacked on the tray is a single-row battery cell, double-row battery cell, or other types of battery cells. The battery cell information may further include whether a stacked battery cell exists in the tray on the stacking table. For example, after the battery stack system is powered off and then powered on again, the controller needs to determine whether a stacked battery cell exists in the tray on the stacking table.

Here, the battery stacking apparatus according to the embodiments of the present disclosure may include at least one, for example, two, stacking tables. One tray is placed on each stacking table, and types of battery cells that can be stacked in each tray may be different. In this way, different battery products can be stacked on one stacking station, which improves the degree of production automation and also enhances the production efficiency of the production line.

In some embodiments, the tray may further be provided with a leveling sensor configured to detect whether the tray is stably placed. For example, the leveling sensor may be implemented by using a proximity switch sensor. Proximity switch sensors in pairs are respectively disposed at opposite sides of the bottom of the tray, for example, at two corners of the same side, or at two diagonal corners. After the tray is in place, the controller receives a leveling signal sent by the leveling sensor. In the case that the leveling signal indicates that the tray is stable, the controller reads an electronic tag (for example, battery cell information stored in RFID) on a module tray by using an information reading apparatus, and determines, on the basis of the read battery cell information stored in the tray, whether a to-be-stacked battery cell on the tray is a single-row battery cell or a double-row battery cell.

Step S202, determine battery cell information of a target battery cell on a battery cell conveying line.

In some embodiments, a target battery cell stacked in the battery stack system is a battery cell that has completed a previous process (which may be, for example, battery cell detection), is conveyed through a battery cell conveying line to a stacking station where the battery stack method according to the present disclosure is implemented, and realizes the stacking at the stacking station.

The battery cell information of the target battery cell may also be read by an information reading apparatus of the battery stack system. Each target battery cell is also provided with an electronic tag. The battery cell information of the target battery cell can be obtained by reading the electronic tag. The battery cell information may at least include a battery cell attribute of the target battery cell. For example, the battery cell attribute is used for representing arrangement information of the target battery cell. The arrangement information refers to that the target battery cell is a single-row battery cell, a double-row battery cell, or a battery cell arranged in another form. As shown in FIG. 1, the single-row battery cell may be a single battery or a battery unit formed by joining large faces of two batteries, the double-row battery cell is a battery unit formed by joining side surfaces of two batteries, and the multi-row battery cell is a battery unit formed by joining side surfaces of a plurality of batteries. The double-row battery cell and the multi-row battery cell may consist of at least one battery in a direction perpendicular to the large surfaces of the batteries. The battery cell attribute may further include a battery cell type of the target battery cell. For example, different battery products are formed by stacking battery cells of different types, and only target battery cells of the same battery cell type can be stacked to form a qualified battery pack. Here, the battery cells conveyed on the battery cell conveying line may be battery cells of different battery cell types. Therefore, the type of each target battery cell needs to be determined to avoid the problem that battery cells of different battery products are stacked together, resulting in that the finally obtained battery pack cannot be used.

In some embodiments, the battery cell information of the target battery cell may further include a production formula of the target battery cell. The production formula at least includes a position at which the target battery cell is placed in the tray during stacking, such that after obtaining the battery cell information of the target battery cell, the controller places the target battery cell at a specified position of the tray according to the production formula. The production formula may further include a stacking quantity of the battery product corresponding to the target battery cell. For example, battery product A is formed by stacking three battery cells, such that after obtaining the battery cell information of the target battery cell, the controller grabs the target battery cell corresponding to battery product A for three times to form battery product A during stacking for battery product A.

Step S203, in the case that the battery cell information stored in the tray matches the battery cell information of the target battery cell, control the grabbing apparatus to grab the target battery cell and place the target battery cell in the tray.

Here, the battery cell information stored in the tray matching the battery cell information of the target battery cell may refer to that the attribute of a battery cell to be placed in the tray matches the attribute of the target battery cell. For example, the target battery cell and a battery cell to be stacked in the tray are both single-row battery cells or double-row battery cells. In this case, the tray matches the target battery cell, and the grabbing apparatus can grab the target battery cell and place the target battery cell in the tray. This step is repeated to realizing stacking of the target battery cells.

In some embodiments, in addition to the attribute matching between the tray and the target battery cell, when a stacked battery cell exists on the tray, whether the attribute and type of the stacked battery cell on the tray are consistent with those of the target battery cell also needs to be determined. If the types or attributes are inconsistent, the target battery cell cannot be grabbed into the tray. For example, if three single-row battery cells corresponding to battery product A exist on the tray, but the target battery cell on the battery cell conveying line is a single-row battery cell corresponding to battery product B, the target battery cell cannot be grabbed into the tray for further stacking with the stacked battery cells, and the stacking for battery product B needs to be performed on another tray.

In some embodiments, the grabbing apparatus may be a robotic arm mounted on the base support. The robotic arm is configured to place at least one target battery cell at a specified position on the stacking table in a specified orientation. The specified position includes a position of a tray configured to accommodate the target battery cells.

In some embodiments, the battery stack system further includes shapers and a pushing plate, for implementing shaping in a battery stacking process. After the controller acquires, according to the production formula of the target battery cell, the stacking quantity for the battery product corresponding to the target battery cell, each time a target battery cell is grabbed, in a direction parallel to the large face of the target battery cell, shapers acting in pairs push the target battery cell on the tray to perform an alignment operation, and in a direction perpendicular to the large face of the target battery cell, the pushing plate implements a pushing operation on an adjacent target battery cell, such that a target battery cell subsequently placed on the tray is close to a previous target battery cell. The alignment step and the pushing step are repeated, until the target battery cells on the tray are stacked into a battery cell array having the stacking quantity for the battery product.

In some embodiments, after the stacking is completed, the controller further binds, according to whether the battery cells in the stacked battery cell array are single-row battery cells or double-row battery cells, information corresponding to the single-row battery cells or double-row battery cells, with related information such as a work order number, then stores the information, and writes the stored information into the electronic tag of the tray. After determining that the stacking on the tray is completed, the controller resets all the electric structural members (a servo motor, a cylinder, and the like), and controls, after the information is written into the electronic tag of the tray, the stacking motor to continue working, such that a tray on which stacking is completed flows out, and an empty tray flows into the specified position of the stacking table.

After the stacking on the current tray is completed, the controller determines whether a work order is completed. In the case that the work order is completed, the controller determines that all stacking operations are completed. The controller records the quantity of completed battery cell arrays, writes the current station number into the tray for recording, and may subsequently switch to a new work order. In the case that the work order is not completed, the controller records the quantity of completed battery cell arrays and the quantity of uncompleted battery cell arrays. In the case that the stacking of a battery cell array is completed, the controller subtracts one from the quantity of uncompleted battery cell arrays, and repeatedly performs a process of continuing stacking until the work order is completed. In the case that the stacking work order is completed, the controller controls empty trays and remaining materials to flow out of the stacking table.

In the embodiments of the present disclosure, when the battery cell on the battery cell conveying line is grabbed by the grabbing apparatus, the battery cell information of the target battery cell on the conveying line and the battery cell information stored in the tray are determined, and the target battery cell on the conveying line is grabbed into the matching tray for battery stacking, such that the battery cells of different battery products can be placed into corresponding trays by the battery stack method according to the embodiments of the present disclosure, thereby realizing the stacking of different battery products. On the basis of realizing automatic stacking, the method not only enhances the production efficiency of the battery stack system, but also improves the compatibility of the battery stack system, thereby reducing production costs.

In some embodiments, the battery stack system further includes an information reading apparatus disposed on the stacking table and a detection apparatus disposed on the stacking table. Here, the information reading apparatus is configured to read the battery cell information stored in the tray. For example, the tray is provided with an electronic tag, and the information reading apparatus can read the electronic tag. By means of reading the electronic tag through the information reading apparatus, the information stored in the tray can be obtained, including information of to-be-stacked or stacked battery cells supported by the tray, including specifications of the battery cells, an arrangement manner of the battery cells on the tray (for example, a single-row module or a double-row module), the quantity of battery cells in the array when the battery cell array stacking is completed, and the like. The detection apparatus may be a ranging meter. The ranging meter determines whether a stacked battery cell exists on the tray by detecting a distance between the ranging meter and the tray, or in the case that there is a stacked battery cell, determines how many battery cells have been stacked in the array by detecting a distance between the ranging meter and a tail battery cell of the battery cell array. It should be noted that, the tail battery cell of the battery cell array refers to a battery cell that is closest to the ranging meter in a battery cell array obtained after stacking and shaping. On the basis of the information reading apparatus and the detection apparatus, step S201 may be implemented by means of step S2011 to step S2014:

Step S2011, control the information reading apparatus to read information from a tray identifier of the tray, and determine stacking category information of a to-be-stacked battery cell corresponding to the tray. The stacking category information is used for representing arrangement information of the to-be-stacked battery cell.

In some embodiments, the information reading apparatus may also be a device such as a code scanner. The controller reads an electronic tag (for example, module information stored in an RFID) on a module tray by using the code scanner, and determines, on the basis of the read module information, stacking category information of to-be-stacked battery cells corresponding to the tray, i.e., arrangement information of the to-be-stacked battery cells on the tray. The arrangement information may refer to that the battery cells are arranged in a single-row, double-row, or multi-row form. As shown in FIG. 1, the single-row battery cell may be a single battery or a battery unit formed by joining large faces of two batteries, the double-row battery cell is a battery unit formed by joining side surfaces of two batteries, and the multi-row battery cell is a battery unit formed by joining side surfaces of a plurality of batteries. The double-row battery cell and the multi-row battery cell may consist of at least one battery in a direction perpendicular to the large surfaces of the batteries.

Step S2012, control the detection apparatus to perform distance detection on the tray, to obtain a tray distance between the detection apparatus and the tray.

In some embodiments, the detection apparatus may be a ranging sensor. The ranging sensor performs distance detection on the tray, obtains a tray distance between the detection apparatus and the tray, and sends the detected tray distance to the controller.

In some embodiments, the controller can determine, on the basis of the obtained tray distance between the detection apparatus and the tray, whether a tray exists on the stacking table. For example, a tray distance in the case that a tray exists on the stacking table is less than a tray distance in the case that no tray exists. Alternatively, the controller determines, on the basis of whether the detected tray distance falls within a preset range, whether a tray exists.

In the embodiments of the present disclosure, the tray distance may be of two types. The first type occurs when no stacked battery cell exists on the tray, in which case the tray distance has only one value, which is a distance between a region on the tray body that is closest to the detection apparatus and the detection apparatus. The second type occurs when a stacked battery cell exists on the tray, in which case the tray distance has two values, including a distance between the tray body and the detection apparatus and a distance between the surface of the stacked battery cell on the tray that is closest to the detection apparatus and the detection apparatus.

Step S2013, according to the tray distance, determine whether a stacked battery cell exists on the tray.

In some embodiments, whether a stacked battery cell exists on the tray can be determined according to whether the tray distance has one value or two values.

Step S2014, in the case that a stacked battery cell exists on the tray, determine a battery cell type of the stacked battery cell on the tray.

In some embodiments, in the case that a battery cell exists on the tray, the detection apparatus may further determine how many battery cells are stacked by detecting a distance between the detection apparatus and a tail battery cell of a battery cell array on the tray. It should be noted that, the tail battery cell of the battery cell array refers to a battery cell that is closest to the ranging meter in a battery cell array obtained after stacking and shaping.

According to the embodiments of the present disclosure, the battery cell information stored in the tray on the stacking table is read, and the target battery cell matching the tray for stacking is realized, such that compatibility with the stacking of battery cell arrays of different specifications is realized. For example, compatibility with a single-row battery cell array formed by arranging single-row battery cells and a double-row battery cell array formed by arranging double-row battery cells can be realized. In this way, compatibility (flexibility) of the stacking apparatus or even the entire battery production line is improved, and further the production efficiency of battery grouping can be enhanced.

Correspondingly, the battery cell information stored in the tray matching the battery cell information of the target battery cell in step S203 may include one of step S1 and step S2:
Step S1: In the case that the stacking category information of the tray matches the battery cell attribute of the target battery cell, no stacked battery cell exists on the tray.

In some embodiments, in the case that the stacking category information of the tray matches the battery cell attribute of the target battery cell, if no stacked battery cell exists on the tray, that is, the target battery cell on the battery cell conveying line is the first battery cell of the tray, the battery cell information stored in the tray matches the battery cell information of the target battery cell, and the target battery cell can be directly grabbed and placed on the tray for stacking of the target battery cell. That is, the target battery cell on the battery cell conveying line is the first battery cell of the tray, the battery cell information stored in the tray matches the battery cell information of the target battery cell, and the target battery cell can be directly grabbed and placed on the tray for stacking of the target battery cell.

Step S2: In the case that the stacking category information of the tray matches the battery cell attribute of the target battery cell and a stacked battery cell exists on the tray, the battery cell type of the stacked battery cell is the same as the battery cell type of the target battery cell.

In some embodiments, in the case that the stacking category information of the tray matches the battery cell attribute of the target battery cell, if a stacked battery cell exists on the tray, whether the battery cell type of the stacked battery cell is the same as the battery cell type of the target battery cell needs to be determined. If they are the same, the target battery cell may be directly grabbed and placed on the tray for stacking of the target battery cell. If they are different, the target battery cell needs to be placed on another empty tray on the stacking table, or the current tray with the battery cell needs to flow out, and after a new empty tray is placed, the target battery cell is directly grabbed and placed on the new empty tray for stacking of the target battery cell. For example, if three single-row battery cells corresponding to battery product A already exist on the tray, but the target battery cell on the battery cell conveying line is a single-row battery cell corresponding to battery product B, the target battery cell cannot be grabbed into the tray for stacking with the stacked battery cells, and the stacking for battery product B needs to be performed on another tray.

In some embodiments, in the case of determining that a stacked battery cell exists on the tray, whether stacking of the stacked battery cell for an entire column of the battery cell array is determined. If it is determined, on the basis of the number of rows of the stacked battery cell array, that the stacking of battery cells on the tray is completed, the controller controls the tray to be in a state of keeping the battery cell array. If it is determined, on the basis of the number of rows of stacked battery cell array, that the stacking of battery cells on the tray is not completed, the stacking continues.

Regardless of whether a battery exists on the tray or whether the stacking is completed or not completed, the controller can acquire the quantity of stacked battery cells stored in the controller or the tray (for example, determined on the basis of the quantity of battery cells grabbed by the grabbing apparatus or the number of times of grabbing), and determine whether the quantity of stacked battery cells stored in the controller or the tray is consistent with the quantity of battery cells determined on the basis of the ranging meter. If they are consistent, the stacking continues. If they are inconsistent, an alarm is triggered, or the quantity of stacked battery cells stored in the tray or the quantity of stacked battery cells is updated to the quantity of battery cells determined on the basis of the distance.

According to the embodiments of the present disclosure, before battery cells are placed in the tray for stacking, a matching degree between the target battery cell and the tray is determined, and the matched target battery cell is placed in a corresponding tray, such that the probability of stacking battery cells of different battery cell types together is reduced, and the yield rate of a battery pack obtained after the stacking is increased.

In some embodiments, the battery stack system further includes a tray conveying guide rail and a jacking apparatus that is disposed on the base support. The tray conveying guide rail is configured to drive the tray accommodating the battery cells into or out of a fixed position of the base support, and the jacking apparatus is configured to jack up the tray at the fixed position to the stacking table or lower the tray on the stacking table to the tray conveying guide rail.

On the basis of the foregoing embodiments, in the case that the stacking category information of the tray matches the battery cell attribute of the target battery cell but the battery cell type of the stacked battery cells on the tray is different from the battery cell type of the target battery cell, the battery stack method according to the embodiments of the present disclosure further includes step S3 and step S4:
Step S3: In the case that the stacking category information of the tray matches the battery cell attribute of the target battery cell but the battery cell type of the stacked battery cell on the tray is different from the battery cell type of the target battery cell, control the jacking apparatus to run, to lower the tray with the stacked battery cell on the stacking table to the tray conveying guide rail.

Step S4: Control the tray conveying guide rail to run, to carry the tray with the stacked battery cell away from the base support.

In some embodiments, in the case that the stacking category information of the tray matches the battery cell attribute of the target battery cell but the battery cell type of the stacked battery cells on the tray is different from the battery cell type of the target battery cell, which indicates that the battery cell information stored in the tray does not match the battery cell information of the target battery cell, the tray on the stacking table needs to flow out, and the jacking apparatus can be controlled to run, to lower the tray with the stacked battery cell on the stacking table to the tray conveying guide rail. Then, the tray conveying guide rail is controlled to run, to carry the tray with the stacked battery cells away from the base support.

According to the embodiments of the present disclosure, by determining whether the stacking category information of the tray matches the battery cell attribute of the target battery cell, the probability of stacking battery cells of different battery cell types together is reduced, thereby avoiding the case that the battery pack obtained after stacking cannot be used, and increasing the yield rate of the battery pack obtained after the stacking.

In some embodiments, FIG. 3 is a second optional schematic flow diagram of a battery stack method according to the embodiments of the present disclosure. As shown in FIG. 3, in the case that the battery cell information stored in the tray matches the battery cell information of the target battery cell, controlling the grabbing apparatus to grab the target battery cell and place the target battery cell in the tray in step S203 may be implemented by means of step S301 to step S303:

Step S301: In the case that the stacking category information of the tray matches the battery cell attribute of the target battery cell and no stacked battery cell exists on the tray, determine a production formula of the target battery cell according to the battery cell type of the target battery cell.

In the embodiments of the present disclosure, in the case that the stacking category information of the tray matches the battery cell attribute of the target battery cell and no stacked battery cells exist on the tray, that is, the target battery cell on the battery cell conveying line is the first battery cell of the tray, a production formula when the target battery cell is stacked is determined according to an electronic tag of the target battery cell, and a placement position of the battery cell on the tray is further determined.

Step S302: Determine a placement position of the target battery cell in the tray according to the production formula.

In some embodiments, the production formula at least includes a position at which the target battery cell is placed in the tray during stacking, such that after obtaining the battery cell information of the target battery cell, the controller places the target battery cell at a specified placement position of the tray according to the production formula in the battery cell information. Since quantities of battery cells stacked in different battery products are different, for the stacking of the battery cells, each battery cell has a different placement position when the battery cells of different battery products are stacked. For example, product A is formed by stacking eight single-row battery cells of a first type, and product B is formed by stacking four single-row battery cells of a second type. During stacking, the single-row battery cells of the first type and the single-row battery cells of the second type are placed in different positions in the tray, and these positions are stored in the electronic tag of the target battery cell.

In some embodiments, if a battery product obtained after stacking of a target battery cell includes eight single-row battery cells, in a production formula corresponding to the target battery cell, the placement position of each target battery cell may be the same. In this case, after each target battery cell is placed on the tray, each time a battery cell is placed, the battery cell is aligned and pressed by the shaper and the pushing plate, to move the stacked battery cells in the tray to realize battery stacking. The placement position of each target battery cell may also be different. In this case, after the eight target battery cells are all placed on the tray, the eight battery cells are aligned and pressed at one time by the shaper and, to move the battery cells in the tray to realize battery stacking.

Step S303: Determine a placement position of the target battery cell in the tray according to the production formula.

In the embodiments of the present disclosure, in the case that the battery cell information stored in the tray matches the battery cell information of the target battery cell and the placement position of the target battery cell is obtained, the grabbing apparatus is controlled to grab the target battery cell and place the target battery cell at the placement position in the tray.

According to the embodiments of the present disclosure, in the case that the battery cell information stored in the tray matches the battery cell information of the target battery cell, the placement position of the target battery cell in the tray is determined according to the production formula of the target battery cell, such that the grabbing apparatus can quickly place the target battery cell on the tray after grabbing, without determining whether an empty space exists on the tray for placing the battery cell after grabbing, thereby reducing the calculation load of the controller and enhancing the production efficiency of the production line.

In some embodiments, in the case that the battery cell information stored in the tray matches the battery cell information of the target battery cell, controlling the grabbing apparatus to grab the target battery cell and place the target battery cell in the tray in step S203 may further be implemented by means of step S304 to step S306:
Step S304: In the case that the stacking category information of the tray matches the battery cell attribute of the target battery cell and a stacked battery cell exists on the tray, determine a quantity of battery cells on the tray according to a tray distance between a detection apparatus and the tray, which is determined by the detection apparatus.

In some embodiments, when the stacking category information of the tray matches the battery cell attribute of the target battery cell and stacked battery cells exist on the tray, the quantity of the stacked battery cells needs to be determined, to determine whether the stacking is completed. In the case that the stacking is not completed, the target battery cell on the battery cell conveying line is grabbed to the tray, to continue the stacking of battery cells.

In some embodiments, the detection apparatus can detect, on the basis of the determined tray distance between the detection apparatus and the tray, a stacking quantity of battery cells in the battery cell array obtained after shaping on the tray, such that the current stacking status (for example, the quantity of battery cells on the tray, i.e., the quantity of stacked battery cells and a position at which a tail of the battery cell array is located) can be acquired, and precise control can be further performed according to the current stacking state.

Step S305: In the case that the quantity of battery cells is less than the stacking quantity, determine a placement position of the target battery cell in the tray according to the quantity of battery cells.

Here, the stacking quantity refers to a quantity of battery cells in the tray when the stacking of the target battery cells for a battery cell array is completed.

In some embodiments, in the case that the quantity of battery cells in the tray is less than the stacking quantity, the placement position of the target battery cell in the tray is determined according to the quantity of battery cells in the tray and according to the product formula of the target battery cell.

Step S306: Control the grabbing apparatus to grab the target battery cell and place the target battery cell at the placement position in the tray.

On the basis of the placement position, the grabbing apparatus is controlled to grab the target battery cell and place the target battery cell at the placement position in the tray. This step is repeated until the quantity of battery cells in the tray is equal to the stacking quantity. The battery cell in the tray is shaped to complete the stacking.

In some embodiments, in the case that the quantity of battery cells is equal to the stacking quantity, the jacking apparatus can be first controlled to run, to lower a tray on which stacking is completed on the stacking table to the tray conveying guide rail. Then, the tray conveying guide rail is controlled to run, to carry the tray on which stacking is completed away from the base support.

According to the embodiments of the present disclosure, when a stacked battery cell exists on the tray, the placement position of the target battery cell in the tray is determined according to the production formula of the target battery cell, such that the grabbing apparatus can quickly place the target battery cell on the tray after grabbing, without determining whether an empty space exists on the tray for placing the battery cell after grabbing, thereby reducing the calculation load of the controller and enhancing the production efficiency of the production line.

In some embodiments, before battery stacking, whether a tray exists on the stacking table needs to be determined first. In the case that no tray exists, a tray needs to be driven to the stacking table by the tray conveying guide rail. The battery stack method according to the embodiments of the present disclosure further includes step S10 to step S14:
Step S10: In response to that no tray exists on the stacking table, determine whether a tray exists on the tray conveying guide rail.

Before the battery stack method according to the embodiments of the present disclosure is started, whether a tray exists on the stacking table needs to be determined. That is, the controller determines whether a tray exists at a specified position of the stacking table, and if a tray exists, determines that the tray is in place. In the case that the controller determines that a module tray exists at the specified position and the tray is in place, the battery stack method according to the embodiments of the present disclosure is performed in the tray.

In the case that the controller determines that no tray exists at the specified position of the stacking table, the controller waits for a tray on the production line to enter a specified position of the stacking table; that is, the controller determines whether a tray exists at a stacking front end of the production line. In the case that a tray exists at the stacking front end of the production line, the controller controls a stacking motor to start running, and the stacking motor controls a tray conveying guide rail to run, to release the tray on the production line, such that after the tray enters the specified position of the stacking table, the stacking motor is controlled to stop running.

Step S11: In the case that a tray exists on the tray conveying guide rail, control the tray conveying guide rail to run, to drive the tray to move to a stacking position of the base support.

Here, in the direction perpendicular to the ground, the stacking position of the base support coincides with a projection of the tray on the specified position of the stacking table. In the case that a tray exists on the tray conveying guide rail, the controller controls the stacking motor to start to run, and the stacking motor controls the tray conveying guide rail to run, to drive the tray to move to the stacking position of the base support.

Step S12: Control the jacking apparatus to run, to jack up the tray at the stacking position to the stacking table.

In some embodiments, after the tray moves to the stacking position of the base support, the controller controls the jacking apparatus to run, to jack up the tray at the stacking position to the specified position of the stacking table.

Step S13: In response to that no tray exists on the tray conveying guide rail, control the tray conveying guide rail to stop running until a tray exists on the tray conveying guide rail.

Here, in the case that no tray exists on the tray conveying guide rail, no tray is allowed to enter the stacking table at present, and a waiting period starts, which is generally at least one takt time, for example, several seconds. When the waiting period starts, the controller controls the stacking motor to start running. After the tray on the tray conveying guide rail enters the stacking position of the base support, the controller controls the stacking motor again to stop running.

Step S14: In response to that a tray exists on the stacking table, control the tray conveying guide rail to stop running.

In some embodiments, if a tray exists on the stacking table, the controller controls the stacking motor to stop running, and in this case, no tray moves on the tray conveying guide rail.

In some embodiments, each stacking table is provided with one stacking motor. The stacking motor provides a driving force for the tray conveying guide rail during working, such that the tray on the tray conveying guide rail flows into the specified position of the stacking table. In the case that a tray exists at the specified position of the stacking table, the controller controls the stacking motor to stop working, such that the tray on the tray conveying guide rail does not enter the specified position of the stacking table.

According to the embodiments of the present disclosure, the trays on the stacking table and the tray conveying guide rail are detected. When no tray exists on the stacking table, a tray is transported to the stacking table through the tray conveying guide rail, such that stacking without shutdown is realized. Conversely, in the case that a tray exists on the stacking table, the tray conveying guide rail is stopped from running, to avoid the problem that the stacking motor runs all the time, resulting in the tray on the guide rail being transported to the stacking table having a tray, thus causing the stacking process to be out of sequence and damaging the battery cell being stacked.

In some embodiments, the stacking table on the base support may include at least one stacking table, for example, a first stacking table and a second stacking table. In the case that a to-be-stacked battery cell corresponding to the tray is a single-row battery cell, the tray is placed on the first stacking table; in the case that a to-be-stacked battery cell corresponding to the tray is a double-row battery cell, the tray is placed on the second stacking table.

In some embodiments, in the battery stack system, two stacking tables may be arranged in a parallel manner, but this is not limited to two parallel stacking tables, and three or more stacking tables may also be provided. Two or more stacking tables are provided to share a conveying line channel for conveying to-be-stacked battery cells, such that the battery stack system realizes coordinated operational timing, thereby reducing the takt time and enhancing the production efficiency.

In some embodiments, the first stacking table and the second stacking table are each provided with a detection apparatus. The battery stack method according to the embodiments of the present disclosure further includes step S20 to step S21:
Step S20: Detect stacking quantities of stacked battery cells in trays of the first stacking table and the second stacking table through the detection apparatuses, respectively.
Step S21: In response to that the quantity of stacked battery cells on the first stacking table or the second stacking table is equal to a stacking quantity, control the jacking apparatus to run, to carry the tray on the first stacking table or the second stacking table away from the stacking table. The stacking quantity is used for representing a quantity of battery cells in a tray when stacking of the stacked battery cells is completed.

In some embodiments, the stacking quantities of the stacked battery cells in the trays of the first stacking table and the second stacking table are detected by the detection apparatuses of the stacking tables, respectively. When the quantity of the stacked battery cells on the first stacking table or the second stacking table is equal to the stacking quantity, that is, the stacking for one battery product has been completed on the tray, the jacking apparatus is controlled to run, to carry the tray on the first stacking table or the second stacking table that is fully stacked away from the stacking table, and to transport a new tray to an empty stacking table through the tray conveying guide rail.

According to the embodiments of the present disclosure, the stacking state of each stacking table can be automatically determined, and after one stacking table is full of battery cells, the battery cells are placed on the other stacking table, such that stacking of battery cells without shutdown is realized.

In some embodiments, the battery stack system further includes shapers and a pushing plate that are disposed on the base support. The battery stack method according to the embodiments of the present disclosure further includes step S30 to step S31:
Step S30: The shapers acting in pairs push battery cells on the tray to perform an alignment operation, and the pushing plate pushes the battery cells on the tray to perform a pushing operation.

According to the embodiments of the present disclosure, the battery cells on the tray can be aligned through the alignment operation of the shapers acting in pairs, and the pushing operation can be performed on the battery cells through the pushing plate, such that the center lines of the plurality of battery cells are aligned and abut against a reference plate of the tray.

Step S31: Each time after a battery cell is placed in the tray, repeatedly control the alignment operation of the shapers and the pushing operation of the pushing plate until a battery having a predetermined length is obtained by stacking.

According to the embodiments of the present disclosure, whether the current battery cell array has a predetermined length, that is, whether the quantity of battery cells reaches the stacking quantity, can be detected by the detection apparatus. According to a detection result of the detection apparatus, if the battery cell array has a specified length, it indicates that a required battery cell array has been obtained by stacking, and the current stacking is completed; if the battery cell array does not have a specified length, it indicates that additional battery cells need to be placed for stacking. Therefore, the steps of grabbing, aligning, and pushing battery cells are repeated until a battery cell array having a predetermined length is obtained by stacking, so as to obtain a required battery cell array by stacking.

According to the embodiments of the present disclosure, since the alignment of battery cells can be realized by pushing both end faces of the battery cells through the pushing plate, a neat battery cell array with aligned end faces can be easily formed. Since after aligning both end faces of the battery cells, an end surface of the last battery cell in the array is further pushed to move close to the side of the first battery cell, the battery cell array can further be made neat and compact. This further improves the neatness of the battery cell array, thereby enabling a neat battery cell array to be obtained by stacking.

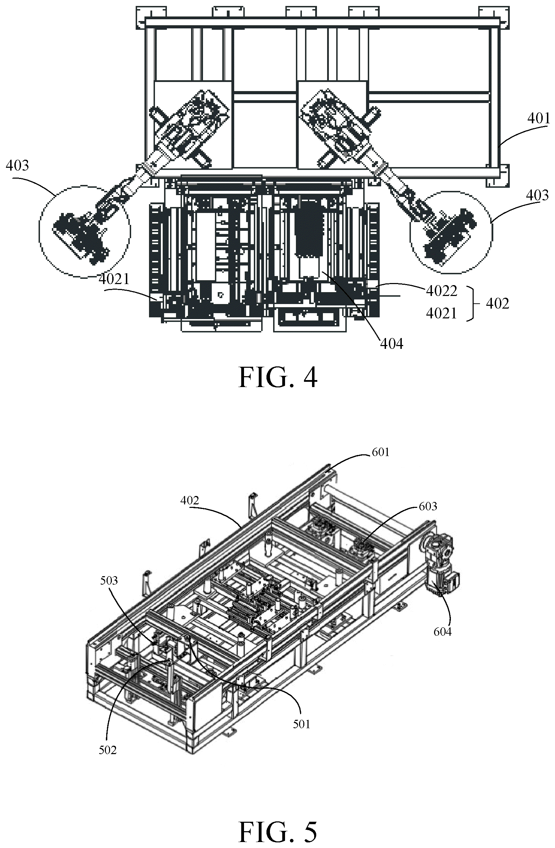

FIG. 4 is a schematic structural diagram of a battery stack system according to the embodiments of the present disclosure. As shown in FIG. 4, the battery stack system according to the embodiments of the present disclosure includes a base support 401, a stacking table 402, a grabbing apparatus 403, and a controller (not shown in the figure).

The stacking table 402 is disposed on the base support 401 and is configured to support a tray 404. A to-be-stacked battery cell may be placed on the tray 404, for example, through the grabbing apparatus 403 or manually. A battery cell array with neat stacking may be transported along with the tray 404, and then transported from the stacking table 402 to another position. In some embodiments, the stacking table 402 may also directly support battery cells and battery cell arrays. A to-be-stacked battery cell may be placed on the stacking table 402, for example, through the grabbing apparatus 403 or manually. A battery cell array with neat stacking may be removed from the stacking table 402 through mechanical grippers of the grabbing apparatus 403, and then transported to another position.

The grabbing apparatus 403 may be a robotic arm disposed on the base support 401, which is configured to grab a battery cell on the battery cell conveying line and place the battery cell in the tray 404.

The controller is configured to: in response to that a tray on the stacking table 402 is in place, determine battery cell information stored in the tray; determining battery cell information of a target battery cell on a battery cell conveying line; and in the case that the battery cell information stored in the tray matches the battery cell information of the target battery cell, control the grabbing apparatus to grab the target battery cell and place the target battery cell in the tray.

FIG. 5 is a first schematic structural diagram of a stacking table in a battery stack system according to the embodiments of the present disclosure. As shown in FIG. 5, the battery stack system further includes an information reading apparatus 501 and a detection apparatus 502.

The information reading apparatus 501 is disposed on the stacking table 402, and is configured to read information from a tray identifier of the tray 404. The tray 404 is provided with an electronic tag (i.e., a tray identifier), and the information reading apparatus 501 can read the electronic tag. By means of reading the electronic tag through the information reading apparatus 501, the battery cell information stored in the tray 404 can be obtained, including information of battery cells supported by the tray 404, including specifications of the battery cells, an arrangement manner of a battery cell array (for example, a single-row module or a double-row module), the quantity of battery cells when arranged into a battery cell array, and the like.

In addition, the stacking table 402 may further be provided with a position detection apparatus 503 configured to detect whether the tray 404 is in place, and the position detection apparatus 503 may be an in-place switch or the like.

Thus, automatic inflow and automatic outflow of the tray 404 relative to the stacking table 402 can be realized, and the tray 404 can be automatically stopped at a specified position, thereby facilitating improving the automation level of the battery stack system, enhancing the positioning accuracy of the tray, and improving the stacking efficiency and stacking effect of the battery cells.

The detection apparatus 502 is disposed on the stacking table 402, and is configured to perform distance detection on the tray. The detection apparatus 502 may be configured to lift and lower relative to the stacking table in a direction perpendicular to the ground. In this way, during the tray entering the stacking table, the detection apparatus 502 is lowered to a position that does not interfere with the movement of the tray. When the tray is in place and is jacked up by the jacking apparatus to be in a state in which a to-be-stacked battery cell can be placed, the detection apparatus 502 is in a lifted position, so as to detect the battery cells in the battery cell array on the tray. Here, the detection apparatus 502 may be a ranging meter, which determines how many battery cells are stacked by detecting a distance between the detection apparatus and a tail battery cell of a battery cell array. It should be noted that, the tail battery cell of the battery cell array refers to a battery cell at a position farthest away from the detection apparatus 502 in a battery cell array obtained after stacking and shaping.

The controller is further configured to: control the information reading apparatus to read information from a tray identifier of the tray, and determine stacking category information of a to-be-stacked battery cell corresponding to the tray, where the stacking category information is used for representing arrangement information of the to-be-stacked battery cell; control the detection apparatus to perform distance detection on the tray, to obtain a tray distance between the detection apparatus and the tray; determine whether a stacked battery cell exists on the tray according to the tray distance; and in the case that a stacked battery cell exists on the tray, determine a battery cell type of the stacked battery cell on the tray.

According to the embodiments of the present disclosure, automatic inflow and automatic outflow of the tray relative to the stacking table can be realized, and the tray can be automatically stopped at a specified position, thereby facilitating improving the automation level of the battery stack system, enhancing the positioning accuracy of the tray, and improving the stacking efficiency and stacking effect of the battery cells.

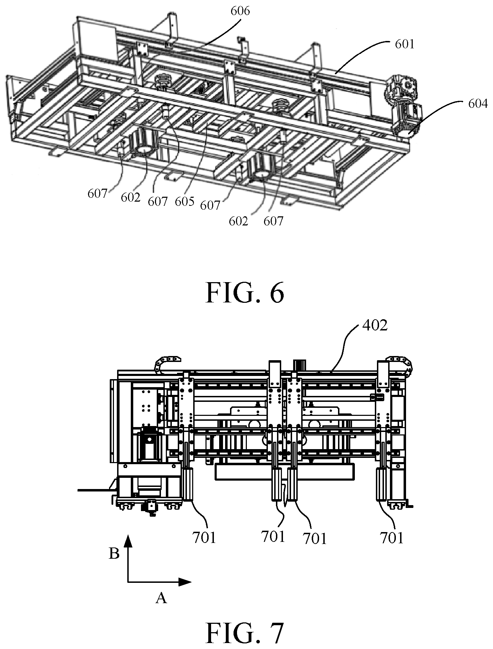

FIG. 6 is a second schematic structural diagram of a stacking table in a battery stack system according to the embodiments of the present disclosure. As shown in FIG. 5 and FIG. 6, the battery stack system further includes a tray conveying guide rail 601 and a jacking apparatus 602.

The tray conveying guide rail 601 is disposed on the stacking table 402. The stacking table 402 includes the tray conveying guide rail 601. The tray conveying guide rail 601 is configured to enable a tray to enter the stacking table 402 or exit the stacking table 402. A stopper 603 is disposed near an end part of the tray conveying guide rail 601.

The tray can enter the stacking table 402 along the tray conveying guide rail 601 under the drive of the stacking motor 604 serving as a power source and be supported by the stacking table 402. The power of the stacking motor 604 may be transmitted to the tray in a gear-rack form, a sprocket-chain form, or the like.

In some embodiments, the side away from the stacking motor 604 is an entry side of the tray. The stopper 603 is disposed near the stacking motor 604. Two stoppers 603 are disposed in the structure shown in FIG. 5. However, the quantity of stoppers 603 is not limited thereto, and may be one or more. The stopper 603 may be implemented by, for example, a blocking cylinder. Certainly, other forms such as a stopper block may also be adopted. The stopper 603 may also be controlled by the controller to block the tray at an appropriate time, such that the tray is stopped at a specified position of the stacking table.

The jacking apparatus 602 is disposed on the stacking table 402, and is configured to lift and lower the tray. The stacking table 402 further includes a jacking support 605 that is lifted and lowered in a direction perpendicular to the ground under the drive of the jacking apparatus 602. The jacking support 605 is configured to lift or lower the tray that enters the stacking table 402. In a process of performing the alignment operation and the pushing operation, the tray is in a lifted state.

The stacking table 402 includes a stacking table support 606 and a jacking support 605 that can be lifted and lowered relative to the stacking table support 606. The jacking apparatus 602 is disposed below the jacking support 605. Exemplarily, the jacking apparatus 602 may be implemented by, for example, a jacking cylinder. Specifically, a cylinder body of the jacking cylinder is fixed to the stacking table support 606, a cylinder rod that is extensible relative to the cylinder body is connected to the jacking support 605, and the jacking support 605 is jacked up by means of telescoping of the cylinder rod. The quantity of jacking apparatuses 602 may be one or two or more. In the structure shown in FIG. 6, the quantity of jacking apparatuses 602 is two.

Some positioning apparatuses configured to position the tray, for example, positioning posts or positioning pins, may also be disposed above the jacking support 605. These positioning posts or positioning pins are in a lowered position that does not hinder the movement of the tray during the inflow of the tray into the stacking table 402 along the tray conveying guide rail 601. After the tray is stopped under the action of the stopper 603, the jacking support 605 is lifted to contact the tray, and these positioning posts or positioning pins may further rise to fit with positioning recesses on the top of the tray, so as to reliably position the tray.

By means of the jacking of the jacking support 605, the tray is separated from the stacking table 402, that is, the tray is separated from the tray conveying guide rail 601.

Since the jacking apparatus 602 can drive the jacking support 605 to enable the tray to be separated from the stacking table 402 during the alignment operation and the pushing operation, the risk of accidental movement of the tray on the stacking table 402 can be reduced, which is conducive to improving continuous positioning precision of the tray and enhancing the alignment accuracy of the entire battery cell array.

In some embodiments of the present disclosure, as shown in FIG. 6, the jacking support 605 further includes a synchronous lifter 607. The synchronous lifter 607 may be a commercially available synchronous lifter. By means of the synchronous lifter 607, the tray can be lifted and lowered stably even if the jacking support 605 and the tray that is jacked up by the jacking support have a relatively large area.

The controller is further configured to: in response to that no tray exists on the stacking table, determine whether a tray exists on the tray conveying guide rail; in the case that a tray exists on the tray conveying guide rail, control the tray conveying guide rail to run, to drive the tray to move to a stacking position of the base support; control the jacking apparatus to run, to jack up the tray at the stacking position to the stacking table; and in response to that no tray exists on the tray conveying guide rail, control the tray conveying guide rail to stop running until a tray exists on the tray conveying guide rail.

Thus, according to the embodiments of the present disclosure, the tray can be stably lifted and lowered, thereby reducing adverse situations such as battery cell displacement and changes in the formation of the battery cell array caused by tray tilting.

Next, referring to FIG. 4 and FIG. 5, the stacking table 402 includes a first stacking table 4021 and a second stacking table 4022. The first stacking table 4021 is configured to place a tray with stacked single-row battery cells; the second stacking table 4022 is configured to place a tray with stacked double-row battery cells. Two detection apparatuses 502 may be disposed on the first stacking table 4021 and the second stacking table 4022, respectively, and configured to detect stacking quantities of stacked battery cells in trays of the first stacking table 4021 and the second stacking table 4022.

The controller is further configured to detect stacking quantities of stacked battery cells on the first stacking table 4021 and the second stacking table 4022 through the detection apparatuses 502, respectively; and control, in response to that the quantity of stacked battery cells on the first stacking table 4021 or the second stacking table 4022 is equal to a stacking quantity, the jacking apparatus 602 to run, to carry the tray on the first stacking table 4021 or the second stacking table 4022 away from the stacking table. The stacking quantity is used for representing a quantity of battery cells in a tray when stacking of the battery cells is completed.

In some embodiments, two columns of single-row battery cells may be simultaneously stacked on the tray on the first stacking table 4021 configured for stacking of single-row battery cells, and one column of single-row battery cells may be stacked on the tray on the second stacking table 4022 configured for stacking of double-row battery cells.

In the embodiments of the present disclosure, by means of providing two or more stacking tables to share a conveying line channel for conveying to-be-stacked battery cells, coordinated operational timing is realized, thereby reducing the takt time. In addition, since the battery cells are placed on the tray, a battery cell array with neat stacking can be transferred to a next processing apparatus without using another holding apparatus, that is, the battery cell array with neat stacking can be directly conveyed to a next processing apparatus by the tray, thereby improving the processing efficiency of the production line.

FIG. 7 is a third schematic structural diagram of a stacking table in a battery stack system according to the embodiments of the present disclosure. As shown in FIG. 7, the battery stack system further includes shapers 701 and a pushing plate (not shown in the figure). The shapers 701 are disposed on the stacking table 402. The shapers 701 act in pairs, and are configured to push battery cells on the tray to perform an alignment operation. The pushing plate is disposed on the stacking table 402, and is configured to push the battery cells to perform a pushing operation.

The structure of FIG. 7 shows four shapers 701. The shapers 701 act in pairs to perform an alignment operation for aligning the battery cells 1 located on the stacking table 402. The paired shapers 701 are configured such that at least one thereof acts to enable the paired shapers 701 to relatively move close to or far away from each other in direction A above the stacking table 402. The alignment operation is performed by the shapers 701 through an action of moving close to each other.

The shapers 701 act in pairs, and the paired shapers 701 can relatively move close to or far away from each other in direction A. If a to-be-stacked battery cell placed on the stacking table 402 is to be stacked, the paired shapers 701 relatively move close to each other above the stacking table 402 in direction A, until they contact the surface of the battery cell located between the two shapers 701 acting in pairs, and apply a certain pushing force to the surface of the battery cell, such that the center line of the battery cell is aligned with the middle position of the paired shapers 701, thereby implementing the alignment operation of the battery cell. Therefore, even if not all the to-be-aligned battery cells are aligned at one time but are aligned in multiple times, all the battery cells can be aligned with each other to form a neatly arranged battery cell array. Such a design enables a timely stacking operation on an incoming battery cell, without waiting until the required quantity of battery cells for forming a battery cell array has arrived before starting the stacking operation, which is beneficial to improving the production efficiency. In addition, since the alignment operation of the battery cell is realized by aligning the center line of the battery cell with the middle position of the paired shapers 701, no additional structural member serving as an alignment reference is required, which is beneficial to simplifying the apparatus composition.

In some embodiments, two or more to-be-stacked battery cells may be placed on the tray of the stacking table 402, and the shapers 701 acting in pairs perform an action of moving close to each other, such that the to-be-stacked battery cells are stacked into a neat battery cell array.

After each alignment of the to-be-stacked battery cells is completed, the shapers 701 may further relatively move far away from each other in direction A. In this way, the shapers 701 do not interfere with the next action of placing the to-be-stacked battery cells. Therefore, the alignment operation can be smoothly and repeatedly performed, and a neatly arranged battery cell array is quickly obtained by stacking.

In some embodiments, two or more to-be-stacked battery cells may be placed on the tray of the stacking table 402, and the shapers 701 acting in pairs repeatedly perform actions of moving close to each other for multiple times, such that the to-be-stacked battery cells are stacked into a neat battery cell array.

The battery stack system further includes a pushing plate. The pushing plate is configured to perform a pushing operation on the battery cell. The pushing plate is disposed on the stacking table 402 and is configured to move forward or move backward in direction B, which intersects direction A. The pushing operation is performed by the pushing plate through the action of moving forward. The battery stack system further includes a reference board, disposed on the bottom stacking table 402, disposed on an opposite side of the pushing plate in direction B, and configured to block the battery cell.

The pushing plate may further make the battery cell array compact and neater in direction B. That is, after the alignment operation is performed in direction A, the pushing operation may further be performed on the battery cell by the pushing plate. Through the pushing operation, the gap between the battery cells in direction B may be reduced or even eliminated, and the battery cells are stacked into a battery having a predetermined length (that is, having the stacking quantity).

The controller is further configured to: push, through an alignment operation of shapers 701 acting in pairs, battery cells on the tray to perform the alignment operation, and push, through a pushing plate, the battery cells to perform a pushing operation; and each time after a battery cell is placed in the tray, repeatedly control the alignment operation of the shapers 701 and the pushing operation of the pushing plate until a battery having a predetermined length is obtained by stacking.

Exemplary applications of the embodiments of the present disclosure to an actual application scenario are described below.

For problems existing in the related technology, the embodiments of the present disclosure provide a battery stack control method. A battery stack control system corresponding to the method includes mechanisms such as a robot for battery cell transfer, a single/double stacking station, and a conveying line, which can realize an automatic stacking function of a battery module. The single/double station stacking, continuous grasping and placing of battery cells by the robot, and formula switching without shutdown improve the takt efficiency of the station, and a variable distance between a robot grasper (i.e., a grabbing apparatus) and a stacking tray (i.e., a tray), that is, movable grasper and tray, improves the compatibility of the stacking station.

According to the embodiments of the present disclosure, a PLC (i.e., a controller) is used as an execution body to schedule a battery stacking station, to complete a material grabbing control logic of a battery module, thereby improving an automatic action process of the station.

First, a battery cell tray flows from a reflow station assembly line to a battery stacking station, where RFID of the tray is read to determine whether the tray is for a single/double-row module, and battery stacking is performed on the basis of the tray information. Second, after the work is completed, a request is sent to the manufacturing execution system (MES) to record outbound data, and the RFID of the tray is read and written, such that the stacking is completed.

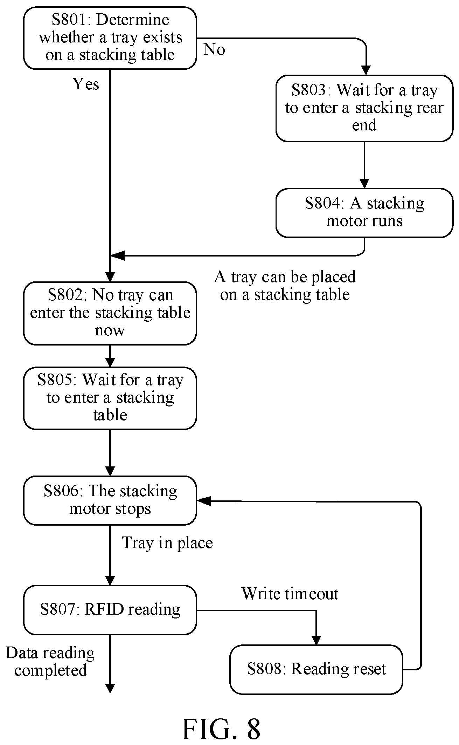

FIG. 8 is a logical control diagram of tray transport according to the embodiments of the present disclosure. As shown in FIG. 8, the tray transport is implemented by means of step S801 to step S808:
S801: Determine whether a tray exists on a stacking table.

In the embodiments of the present disclosure, step S802 is performed when a tray exists on the stacking table, and step S803 is performed when no tray exists on the stacking table.

S802: No tray can enter the stacking table now.

The controller determines whether a tray exists on the stacking table, that is, the controller determines whether a module tray exists at a specified position of the stacking table, and if a module tray exists, determines that the module tray is in place. In the case that the controller determines that a module tray exists at the specified position, a process of stacking battery cells is performed in the module tray.

S803: Wait for a tray to enter a stacking rear end.

In the case that the controller determines that no module tray exists at the specified position, the controller waits for a tray on the production line (i.e., a stacking rear end) to enter the specified position of the stacking table, that is, the controller determines whether a module tray exists at a stacking front end on the production line. In the case that a module tray exists at the stacking front end on the production line, the controller controls a stacking motor to start running, to release the module tray on the production line. After the module tray enters the specified position of the stacking table, the controller controls the stacking motor to stop running.

S804: A stacking motor runs.

In the case that no module tray exists on the production line, no tray can enter the stacking table at present, and a waiting period starts, which is generally at least one takt time, for example, several seconds. When the waiting period starts, the controller controls the stacking motor to start running. After the tray on the production line enters, the controller controls the stacking motor again to stop running.

S805: Wait for a tray to enter a stacking table.

S806: The stacking motor stops.

In some embodiments, after the tray on the production line enters, the controller controls the stacking motor again to stop running.

In some embodiments, two stacking tables, i.e., stacking stations, may be provided. Each stacking table is provided with one stacking motor. The stacking motor provides a driving force for the production line during working, such that the module tray on the production line flows into the specified position of the stacking table. In the case that a module tray exists at the specified position of the stacking table, the controller controls the stacking motor to stop working, such that the module tray on the production line does not enter the specified position of the stacking table.

Cylinders running up and down (that is, cylinders moving along a Z-axis, hereinafter referred to as Z-axis cylinders) are further disposed in an incoming direction and an outgoing direction of the tray on the stacking table, respectively. One of the Z-axis cylinders is provided with a ranging sensor, and the other Z-axis cylinder is provided with a blocking block. For distinguishing, the Z-axis cylinder provided with the ranging sensor may be referred to as a ranging translation cylinder, and a Z-axis cylinder provided with a blocking block may be referred to as a tray blocking cylinder.

The blocking block is configured to block the module tray from moving toward the outgoing direction, and the ranging sensor is configured to detect a distance between the ranging sensor and the battery cell on the module tray. The ranging sensor periodically or aperiodically measures the distance, and sends the distance to the controller. The control determines the number of rows of stacked battery cells on the basis of the distance and the thickness of the battery cell (which can be determined on the basis of the battery cell information of the battery cell), that is, divides the distance by the thickness of the battery cell to obtain the number of rows of stacked battery cells.

In some embodiments, an industrial in-place sensor (also referred to as a position sensor) may be disposed to detect whether the module tray reaches the specified position. If the in-place sensor detects that the module tray reaches the specified position, the in-place sensor sends tray arrival information to the controller, and the controller determines, on the basis of the tray arrival information sent by the in-place sensor, that the module tray has reached the instruction position. Generally, the in-place sensor can detect a position of an object, a relative position movement, or a continuous position change condition.

S807: RFID reading.

In some embodiments, after the module tray enters the specified position on the stacking table from the incoming direction, the controller controls a jacking cylinder on the stacking table to work, and the jacking cylinder drives a jacking mechanism on the stacking table to jack up the module tray, such that the module tray is separated from the production line.

In some embodiments, the module tray is further provided with a sensor configured to detect whether the module tray is stably placed (hereinafter referred to as a leveling sensor). For example, the leveling sensor is implemented by using a proximity switch sensor. Proximity switch sensors in pairs are respectively disposed at opposite sides of the bottom of the module tray, for example, at two corners of a same side, or at two diagonal corners. Since elements such as a screw rod, a motor, and a holder are disposed on an upper surface of the module tray, the leveling sensor is generally disposed at the bottom.

After the module tray is in place, the controller receives a leveling signal sent by the leveling sensor. In the case that the leveling signal indicates that the module tray is stable, the controller reads an electronic tag (for example, module information stored in RFID) on the module tray by using a code scanner, and determines, on the basis of the read module information, whether a to-be-stacked module on the module tray is a single-row module or a double-row module.

S808: Reading reset.

In some embodiments, if the RFID reading times out, the tray is reset and the tray information (i.e., the battery cell information stored in the tray) is read again.

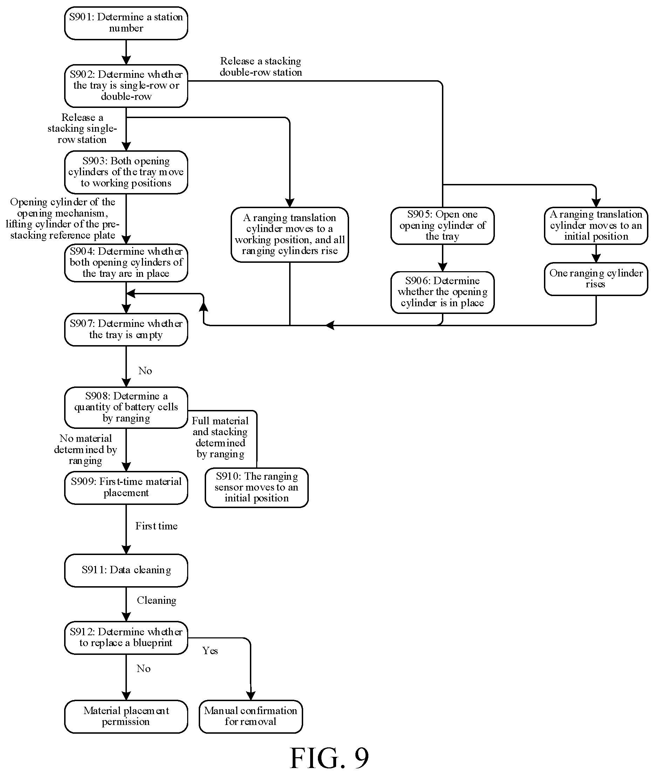

FIG. 9 is a logic flow diagram of performing battery cell stacking after the tray is in place according to the embodiments of the present disclosure. As shown in FIG. 9, after the tray is in place, the cylinders are activated, ranging is performed on the battery cells, and a robot starts material placement. The logic of performing battery cell stacking is implemented by means of step S901 to step S912:
S901: Determine a station number.
S902: Determine whether the tray is single-row or double-row.

In the case of a single-row tray, a single-row station (i.e., single-row stacking table) is released, and step S903 is performed; in the case of a double-row tray, a double-row station (i.e., double-row stacking table) is released, and step S904 is performed. In some embodiments, the battery stack system may further be composed of two battery stacking stations in parallel, where one is a single-row station, and the other is a double-row station.

The controller controls a baffle opening cylinder on the module tray to open, such that the baffle opening cylinder drives a side baffle (a side plate) on the module tray to open, and the controller controls a ranging translation cylinder to rise, to drive a ranging sensor to be in place.

It should be noted that, whether the to-be-stacked module on the module tray is single-row or double-row may affect the quantity of baffle opening cylinders. In some embodiments, the module tray includes two baffle opening cylinders, and each baffle opening cylinder drives one side plate to open (that is, the side plate is in an unblocking state) or retract (that is, the side plate is in a blocking state).

S903: Both opening cylinders of the tray move to working positions.

In the case of a single-row tray, both opening cylinders of the tray open, that is, two side plates open, to realize the stacking of two single-row battery cell modules on the tray.

S904: Determine whether both opening cylinders of the tray are in place.

S905: Open one opening cylinder of the tray.

In the case of a double-row tray, one opening cylinder of the tray opens, that is, one side plate opens, to realize the stacking of a double-row battery cell module on the tray.

S906: Determine whether the opening cylinder is in place.

Step S907 is performed after two opening cylinders of the single-row tray or one opening cylinder of the double-row tray are in place.

S907: Determine whether the tray is empty.

The ranging sensor can perform distance detection and send the detected distance to the controller. The controller determines, on the basis of the distance, whether a module tray exists on the stacking table. For example, a distance in the case that a module tray exists on the stacking table is less than a distance in the case that no module tray exists on the stacking table. Alternatively, the controller determines, on the basis of whether the detected distance falls within a preset range, whether a module tray exists on the stacking table.

The controller may further determine, on the basis of the detected distance, the number of rows of stacked battery cells on the module tray. In some special cases, for example, power loss or other cases, when a device on a production line is restarted after power is restored, it is more needed to determine the number of rows of stacked battery cells on a module tray.

In the case that the tray is not empty, step S908 is performed.

S908: Determine the quantity of battery cells by ranging.

The controller determines, on the basis of the number of rows of stacked battery cells, the quantity of battery cells on the tray.

In the case that no battery cell exists on the tray, step S909 is performed; in the case that full material and stacking are determined by ranging, step S910 is performed.

S909: First-time material placement.

In the case that controller determines, on the basis of the number of rows of stacked battery cells, that no battery cell exists on the module tray, first-time material placement is performed.

S910: The ranging sensor moves to an initial position.

If it is determined, on the basis of the number of rows of stacked battery cells, that the stacking of battery cells on the module tray is completed, the controller controls the ranging translation cylinder to return to an initial position, that is, the ranging translation cylinder drives the ranging sensor to descend, that is. If it is determined, on the basis of the number of rows of stacked battery cells, that the stacking of battery cells on the module tray is not completed, the stacking process continues.

Regardless of whether a battery cell exists on the tray or whether the stacking is completed or not completed, the controller can acquire the quantity of stacked battery cells stored in the controller (for example, determined on the basis of the quantity of battery cells grabbed by the stacking robot or the number of times of grabbing), and determine whether the quantity of stacked battery cells stored in the controller is consistent with the quantity of battery cells determined on the basis of the distance (where the number of rows of battery cells needs to be converted into the quantity of battery cells). If they are consistent, the stacking continues. If they are inconsistent, an alarm is triggered, or the quantity of stacked battery cells stored is updated to the quantity of battery cells determined on the basis of the distance.

S911: Data cleaning.

It should be noted that, generally, the module tray flowing into the production line is empty. The stacking robot places the grabbed battery cells into the module tray, and the shapers of the stacking table shape the placed battery cells to form a stacked module. In some embodiments, the stacking robot may grab a single battery cell, or a battery cell obtained after small units are grouped. The battery cell obtained after small units are grouped usually refers to at least two battery cells that are fixed together, for example, two, three, four, or the like.

In the case that the controller determines that no battery cell exists on the module tray, a subsequent first-time material placement procedure is performed. The first-time material placement procedure includes: The controller controls the stacking robot to grab a battery cell and place the battery cell into the module tray, and then the controller controls the shapers to perform shaping on the battery cell placed into the module tray. In some embodiments, the controller may control the shapers to perform shaping on some or all of the placed battery cells each time after the stacking robot places a battery cell. The controller may further control the shapers to perform shaping on some or all of the placed battery cells after the stacking robot continuously places battery cells at least twice.

S912: Determine whether to replace a blueprint.

In the case of yes, the tray is manually removed, and stacking is performed again after replacing the blueprint; in the case of no, material placement is performed on the tray through the robot gripper.

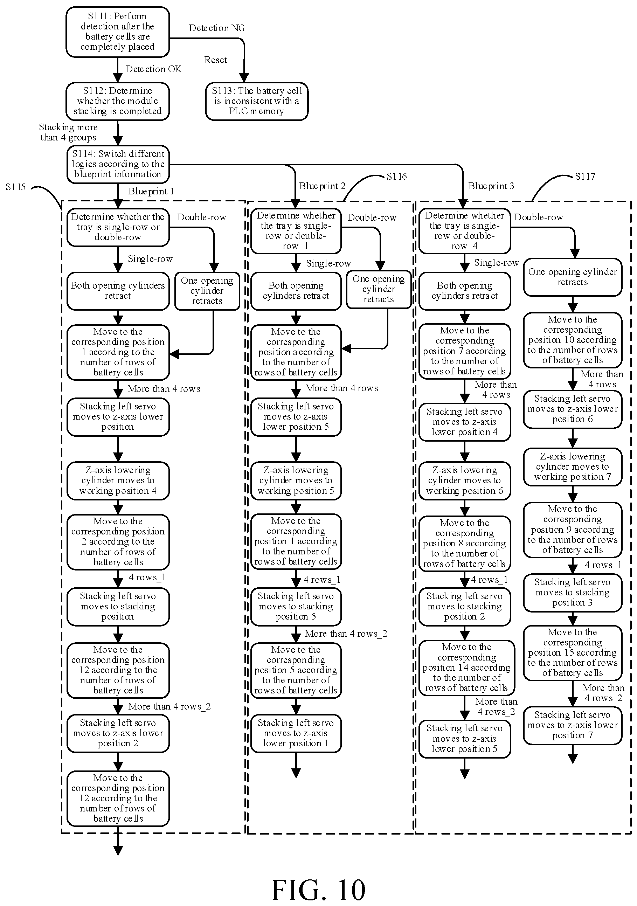

FIG. 10 is a logic flow diagram of resetting a battery cell stack system after battery cell stacking according to the embodiments of the present disclosure. As shown in FIG. 10, the logic after battery cell stacking is implemented by means of step S111 to step S117:
S111: Perform detection after the battery cells are completely placed.

In some embodiments, a stacking robot (i.e., a grabbing apparatus) on the production line may also count the quantity of battery cells placed into a module tray or the number of times of grabbing. The stacking robot may send the count to the controller. The controller determines, on the basis of the count, the quantity of battery cells that have been grabbed, and determines that the quantity of battery cells that have been grabbed is the same as the quantity of battery cells determined on the basis of the ranging sensor. Therefore, the controller determines that the detection result is normal (detection OK), and if the detection is qualified, step S112 is performed; if they are inconsistent, the controller determines that the detection result is abnormal (detection NG), and if the detection is unqualified, step S113 is performed, and then the device triggers an alarm.

S112: Determine whether the module stacking is completed.

If the controller determines that the module stacking is completed, different logical processing is performed on the basis of different product information (blueprint information). If the product information indicates that the stacked module is a single-row module, the controller controls two side plate opening cylinders on the module tray to retract. If the stacked module is a double-row module, the controller controls an open side plate opening cylinder on the module tray to retract. In this way, the baffle opening cylinders drive the side plates on the module tray to be in a blocking state. That is, during shaping and stacking, the side plates are in an open state, and if the stacking is completed, the sides are in a blocking state, so as to maintain the shaping effect. The controller may further control the ranging translation cylinder to descend to return to an initial position.

In some embodiments, the controller may further control, according to the quantity of stacked battery cells and the thickness of the battery cells, a shaper (for example, an X-axis servo motor) to shape the stacked battery cells. In some embodiments, the direction in which the X-axis servo motor needs to perform shaping corresponds to the number of rows of battery cells. Therefore, the stacking position at which shaping is to be performed by the X-axis servo motor can be determined by a product of the thickness of the battery cells and the number of rows of stacked battery cells, and then the number of rotations the X-axis servo motor needs to rotate forward or reverse may be determined on the basis of a distance between a travel distance of the X-axis servo motor and the stacking position at which shaping is to be performed. In some other embodiments, the number of rotations the X-axis servo motor needs to rotate forward or reverse may also be determined according to a distance measured by the ranging sensor and a travel distance of the X-axis servo motor, such that the X-axis servo motor reaches the stacking position at which shaping is to be performed.

S113: The battery cell is inconsistent with a PLC memory.

That is, the quantity of battery cells that have been grabbed is inconsistent with the quantity of battery cells determined on the basis of the ranging sensor, the device triggers an alarm, and no subsequent stacking is performed.

S114: Switch different logics according to the blueprint information.

Step S115 to step S117 are stacking logics corresponding to three different blueprints.

S115: Stacking logic of blueprint 1.

S116: Stacking logic of blueprint 2.

S117: Stacking logic of blueprint 3.

As shown in blueprint 1, after the battery cell stacking is completed, whether an array obtained after stacking is single-row or double-row is determined. If the array is single-row, two opening cylinders retract, and if the array is double-row, one opening cylinder retracts. In some embodiments, a motion direction of the X-axis servo motor may be a three-axis motion direction or a two-axis motion direction. The two-axis motion includes a Z axis and an X axis (using an extension direction of the number of rows of stacked battery cells as the X axis). To perform shaping, the X-axis servo motor moves a certain travel distance in the X-axis after the Z axis descends. To return to the initial position, the X-axis servo motor may first retract to an initial position of the X axis, and then the Z-axis rises back to an initial position of the z axis. Alternatively, to return to the initial position, the Z-axis may first rise back to an initial position of the z-axis and then the X-axis servo motor retracts to an initial position of the X-axis. After the X-axis servo motor completes stacking, the controller controls the X-axis servo motor to return to the initial positions of the x-axis and the z-axis, and tapping servo motors on both sides (i.e., shapers) also return to an initial position.

The stacking logics of blueprint 2 and blueprint 3 are similar to the stack logic of blueprint 1. Therefore, blueprints 2 and 3 are not described in further detail. Here, for different blueprints, the positions of the battery cells placed on the tray during stacking are different. Most battery products have four rows of stacked battery cells, though there is a case that the stacking quantity of battery cells is greater than four. The operations performed by electrical structural members vary depending on the quantity of battery cells.

Step S115 to step S117 all describe that the controller resets all the electric structural members (the servo motors, the cylinders, and the like) after determining that the stacking on the module tray is completed.

In the embodiments of the present disclosure, after the shaping of the battery cells is completed, the controller further determines, on the basis of the product information, whether the module is a single-row module or a double-row module. If the module is a single-row module, the controller binds the single-row module information with related information such as a work order number, and then stores the bound information. If the module is a double-row module, the controller binds the double-row module information with related information such as a work order number, and then stores the bound information, and further writes the stored information into the electronic tag of the module tray. The controller controls, after the information is written into the electronic tag of the module tray, the stacking motor to continue working, such that the module tray with completed stacking flows out, and an empty module tray flows into the specified position of the stacking table.

After the stacking on the current module tray is completed, the controller determines whether a work order is completed. If the work order is completed, the controller determines that all stacking operations are completed. The controller records the quantity of completed modules, writes the current station number into the module tray for recording, and may subsequently switch to a new work order. In the case that work order is not completed, the controller records the quantity of completed modules and the quantity of uncompleted modules. In the case that the stacking of a module is completed, the controller subtracts one from the quantity of uncompleted modules, and repeatedly performs a process of continuing stacking until the work order is completed.

In the case that the stacking work order is completed, the controller controls empty module trays and remaining materials to flow out of the stacking table.

According to the embodiments of the present disclosure, the module stacking process is completed, which not only enables d of whether a module is single-row or double-row according to different formula requirements (i.e., blueprint information), but also can automatically determine a station status. After a station is full, modules are placed on another station, such that stacking without shutdown is realized.

It should be noted that, the description of the system in the embodiments of the present disclosure is similar to the description of the above method embodiments, and the system has beneficial effects similar to those of the method embodiments, and therefore is not described in detail. For technical details not disclosed in the system embodiments of the present disclosure, reference may be made to the description of the method embodiments of the present disclosure for understanding.

The foregoing descriptions are merely embodiments of the present disclosure, and are not intended to limit the scope of protection of the present disclosure. Any modification, equivalent replacement, and improvement made within the spirit and scope of the present disclosure shall fall within the scope of protection of the present disclosure.

### Industrial Applicability

Embodiments of the present disclosure provide a battery stack method and system. The battery stack system at least includes a controller, a base support, and a stacking table and a grabbing apparatus that are disposed on the base support. The battery stack method includes: in response to that a tray on the stacking table is in place, determining battery cell information stored in the tray; determining battery cell information of a target battery cell on a battery cell conveying line; and in the case that the battery cell information stored in the tray matches the battery cell information of the target battery cell, controlling the grabbing apparatus to grab the target battery cell and place the target battery cell in the tray. On the basis of realizing automatic stacking, the method improves the compatibility of the battery stack system.

## Claims

1. A battery stack method, applied to a controller of a battery stack system, wherein the battery stack system at least comprises a base support, and a stacking table and a grabbing apparatus that are disposed on the base support; the battery stack method comprises:
in response to that a tray on the stacking table is in place, determining battery cell information stored in the tray;
determining battery cell information of a target battery cell on a battery cell conveying line; and
in a case that the battery cell information stored in the tray matches the battery cell information of the target battery cell, controlling the grabbing apparatus to grab the target battery cell and place the target battery cell in the tray.

2. The battery stack method according to claim 1, wherein the battery stack system further comprises an information reading apparatus disposed on the stacking table and a detection apparatus disposed on the stacking table; and
the determining the battery cell information stored in the tray comprises:
controlling the information reading apparatus to read information from a tray identifier of the tray, and determining stacking category information of a to-be-stacked battery cell corresponding to the tray, wherein the stacking category information is used for representing arrangement information of the to-be-stacked battery cell;
controlling the detection apparatus to perform distance detection on the tray, to obtain a tray distance between the detection apparatus and the tray;
determine whether a stacked battery cell exists on the tray according to the tray distance; and
in a case that a stacked battery cell exists on the tray, determining a battery cell type of the stacked battery cell on the tray.

3. The battery stack method according to claim 2, wherein the determining the battery cell information of the target battery cell on the battery cell conveying line comprises:
controlling the information reading apparatus to read information from a battery cell identifier of the target battery cell, and determining a battery cell attribute and a battery cell type of the target battery cell, wherein the battery cell attribute is used for representing arrangement information of the target battery cell.

4. The battery stack method according to any one of claims 1 to 3, wherein the battery cell information stored in the tray comprises stacking category information and a battery cell type; the battery cell information of the target battery cell comprises a battery cell attribute and a battery cell type; and
the battery cell information stored in the tray matching the battery cell information of the target battery cell comprises:
in a case that the stacking category information of the tray matches the battery cell attribute of the target battery cell, no stacked battery cell exists on the tray; or,
in a case that the stacking category information of the tray matches the battery cell attribute of the target battery cell and a stacked battery cell exists on the tray, the battery cell type of the stacked battery cell is the same as the battery cell type of the target battery cell.

5. The battery stack method according to any one of claims 2 to 4, wherein the battery stack system further comprises a tray conveying guide rail and a jacking apparatus that is disposed on the base support; and the battery stack method further comprises:
in a case that the stacking category information of the tray matches the battery cell attribute of the target battery cell but the battery cell type of the stacked battery cell on the tray is different from the battery cell type of the target battery cell, controlling the jacking apparatus to run, to lower the tray with the stacked battery cell on the stacking table to the tray conveying guide rail; and
controlling the tray conveying guide rail to run, to carry the tray with the stacked battery cell away from the base support.

6. The battery stack method according to any one of claims 2 to 5, wherein the controlling the grabbing apparatus to grab the target battery cell and place the target battery cell in the tray comprises:
in a case that the stacking category information of the tray matches the battery cell attribute of the target battery cell and no stacked battery cell exists on the tray, determining a production formula of the target battery cell according to the battery cell type of the target battery cell;
determining a placement position of the target battery cell in the tray according to the production formula; and
controlling the grabbing apparatus to grab the target battery cell and place the target battery cell at the placement position in the tray.

7. The battery stack method according to claim 5, wherein the battery cell information of the target battery cell further comprises a stacking quantity, and the stacking quantity is used for representing a quantity of battery cells in a tray when stacking of the target battery cells is completed; and
the controlling the grabbing apparatus to grab the target battery cell and place the target battery cell in the tray comprises:
in a case that the stacking category information of the tray matches the battery cell attribute of the target battery cell and a stacked battery cell exists on the tray, determining a quantity of battery cells on the tray according to a tray distance between a detection apparatus and the tray, which is determined by the detection apparatus;
in a case that the quantity of battery cells is less than the stacking quantity, determining a placement position of the target battery cell in the tray according to the quantity of battery cells; and
controlling the grabbing apparatus to grab the target battery cell and place the target battery cell at the placement position in the tray.

8. The battery stack method according to claim 7, wherein the battery stack method further comprises:
in a case that the quantity of battery cells is equal to the stacking quantity, controlling the jacking apparatus to run, to lower a tray on which stacking is completed on the stacking table to the tray conveying guide rail; and
controlling the tray conveying guide rail to run, to carry the tray on which stacking is completed away from the base support.

9. The battery stack method according to any one of claims 1 to 8, wherein the battery stack system further comprises a tray conveying guide rail and a jacking apparatus that is disposed on the base support; and the battery stack method further comprises:
in response to that no tray exists on the stacking table, determining whether a tray exists on the tray conveying guide rail;
in a case that a tray exists on the tray conveying guide rail, controlling the tray conveying guide rail to run, to drive the tray to move to a stacking position of the base support;
controlling the jacking apparatus to run, to jack up the tray at the stacking position to the stacking table; and
in response to that no tray exists on the tray conveying guide rail, controlling the tray conveying guide rail to stop running until a tray exists on the tray conveying guide rail.

10. The battery stack method according to any one of claims 1 to 9, wherein the battery stack method further comprises:
in response to that a tray exists on the stacking table, controlling the tray conveying guide rail to stop running.

11. The battery stack method according to claim 9, wherein the stacking table comprises a first stacking table and a second stacking table; and the battery stack method further comprises:
in response to that a to-be-stacked battery cell corresponding to the tray is a single-row battery cell, placing the tray on the first stacking table; and
in response to that a to-be-stacked battery cell corresponding to the tray is a double-row battery cell, placing the tray on the second stacking table.

12. The battery stack method according to claim 11, wherein the first stacking table and the second stacking table are each provided with a detection apparatus; and the battery stack method further comprises:
detecting stacking quantities of stacked battery cells in trays of the first stacking table and the second stacking table through the detection apparatuses, respectively; and
in response to that the quantity of stacked battery cells on the first stacking table or the second stacking table is equal to a stacking quantity, controlling the jacking apparatus to run, to carry the tray on the first stacking table or the second stacking table away from the stacking table, wherein the stacking quantity is used for representing a quantity of battery cells in a tray when stacking of the stacked battery cells is completed.

13. The battery stack method according to any one of claims 1 to 12, wherein the battery stack system further comprises shapers and a pushing plate that are disposed on the base support; and
the battery stack method further comprises:
the shapers acting in pairs pushing battery cells on the tray to perform an alignment operation, and the pushing plate pushing the battery cells on the tray to perform a pushing operation; and
each time after a battery cell is placed in the tray, repeatedly controlling the alignment operation of the shapers and the pushing operation of the pushing plate until a battery having a predetermined length is obtained by stacking.

14. A battery stack system, comprising:
a base support;
a stacking table, disposed on the base support and configured to support a tray;
a grabbing apparatus, disposed on the base support and configured to grab a target battery cell on a battery cell conveying line; and
a controller, wherein the controller is configured to: in response to that a tray on the stacking table is in place, determine battery cell information stored in the tray; determine battery cell information of a target battery cell on a battery cell conveying line; and in a case that the battery cell information stored in the tray matches the battery cell information of the target battery cell, control the grabbing apparatus to grab the target battery cell and place the target battery cell in the tray.

15. The battery stack system according to claim 14, wherein the battery stack system further comprises:
an information reading apparatus, disposed on the stacking table and configured to read information from a tray identifier of the tray; and
a detection apparatus, disposed on the stacking table and configured to perform distance detection on the tray; and
the controller is further configured to: control the information reading apparatus to read information from a tray identifier of the tray, and determine stacking category information of a to-be-stacked battery cell corresponding to the tray, wherein the stacking category information is used for representing arrangement information of the to-be-stacked battery cell; control the detection apparatus to perform distance detection on the tray, to obtain a tray distance between the detection apparatus and the tray; determine whether a stacked battery cell exists on the tray according to the tray distance; and in a case that a stacked battery cell exists on the tray, determine a battery cell type of the stacked battery cell on the tray.

16. The battery stack system according to claim 14 or 15, wherein the battery stack system further comprises:
a tray conveying guide rail, disposed on the stacking table and configured to transport the tray; and
a jacking apparatus, disposed on the stacking table and configured to lift and lower the tray; and
the controller is further configured to: in response to that no tray exists on the stacking table, determine whether a tray exists on the tray conveying guide rail; in a case that a tray exists on the tray conveying guide rail, control the tray conveying guide rail to run, to drive the tray to move to a stacking position of the base support; control the jacking apparatus to run, to jack up the tray at the stacking position to the stacking table; and in response to that no tray exists on the tray conveying guide rail, control the tray conveying guide rail to stop running until a tray exists on the tray conveying guide rail.

17. The battery stack system according to any one of claims 14 to 16, wherein the stacking table comprises a first stacking table and a second stacking table, wherein
the first stacking table is configured to place a tray with stacked single-row battery cells; and
the second stacking table is configured to place a tray with stacked double-row battery cells; and
detection apparatuses, disposed on the first stacking table and the second stacking table, respectively, and configured to detect stacking quantities of stacked battery cells in trays of the first stacking table and the second stacking table; and
the controller is further configured to: detect stacking quantities of stacked battery cells on the first stacking table and the second stacking table through the detection apparatuses, respectively; and in response to that the quantity of stacked battery cells on the first stacking table or the second stacking table is equal to a stacking quantity, control the jacking apparatus to run, to carry the tray on the first stacking table or the second stacking table away from the stacking table, wherein the stacking quantity is used for representing a quantity of battery cells in a tray when stacking of the stacked battery cells battery cells is completed.

18. The battery stack system according to any one of claims 14 to 17, wherein the battery stack system further comprises:
shapers, disposed on the stacking table, wherein the shapers act in pairs and are configured to push battery cells on the tray to perform an alignment operation; and
a pushing plate, disposed on the stacking table, and configured to push the battery cells on the tray to perform a pushing operation; and
the controller is further configured to: push, through the shapers acting in pairs, battery cells on the tray to perform an alignment operation, and push, through the pushing plate, the battery cells on the tray to perform a pushing operation; and each time after a battery cell is placed in the tray, repeatedly control the alignment operation of the shapers and the pushing operation of the pushing plate until a battery having a predetermined length is obtained by stacking.
